# EUROPEAN PATENT APPLICATION

(11) **EP 4 761 307 A1**
(43) Date of publication of application: **17.06.2026**
(21) Application number: 23947972.8
(22) Date of filing: 08.08.2023
(51) Int. Cl.: H04W 8/24

(54) **RELAY COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Grassi, Stefano
(86) International application number: PCT/CN2023/111840
(87) International publication number: WO 2025/030394

(57) **Abstract**

The present application relates to a relay communication method, and a device. The method comprises: a first communication device receiving first indication information, wherein the first indication information is used for indicating multi-hop relay capability information of a second communication device. In the embodiments of the present application, multi-hop relay communication can be better supported on the basis of multi-hop relay capability information of the communication device, thereby improving communication reliability and a communication range.

## Description

### TECHNICAL FIELD

The present application relates to the field of communications, and more particularly, to a relay communication method and apparatus.

### BACKGROUND

With the development of wireless communication technologies, relay has been introduced into the 3rd Generation Partnership Project (3GPP). End terminals and the network may be connected through a relay terminal, such as a User Equipment (UE) to network (U2N) relay. Different end terminals, such as a source terminal and a target terminal, may also be connected by a relay terminal, such as a UE to UE (U2U) relay. By performing communication with the relay terminal, the communication distance can be extended and the communication reliability can be improved.

### SUMMARY

Embodiments of the present application provide a relay communication method and apparatus, which can improve communication reliability and communication range.

An embodiment of the present application provides a relay communication method, which includes the following operation.

A first communication device receives first indication information for indicating multi-hop relay capability information of a second communication device.

An embodiment of the present application provides a relay communication method, which includes the following operation.

A second communication device transmits first indication information for indicating multi-hop relay capability information of the second communication device.

An embodiment of the present application provides a relay communication method, which includes the following operation.

A first communication device transmits multi-hop relay-related information for requesting a second communication device to perform a multi-hop relay-related operation.

An embodiment of the present application provides a relay communication method, which includes the following operation.

A second communication device receives multi-hop relay-related information for requesting a second communication device to perform a multi-hop relay-related operation.

An embodiment of the present application provides a first communication device, including: a receiving unit.

The receiving unit is configured to receive first indication information for indicating multi-hop relay capability information of a second communication device.

An embodiment of the present application provides a second communication device, including: a transmitting unit.

The transmitting unit is configured to transmit first indication information for indicating multi-hop relay capability information of the second communication device.

An embodiment of the present application provides a first communication device, including: a transmitting unit.

The transmitting unit is configured to transmit multi-hop relay related information for requesting a second communication device to perform a multi-hop relay related operation.

An embodiment of the present application provides a second communication device, including: a receiving unit.

The receiving unit is configured to receive multi-hop relay related information for requesting the second communication device to perform a multi-hop relay related operation.

Embodiments of the present application provide a communication device, including a transceiver, a processor, and a memory. The memory is configured to store a computer program, the transceiver is configured to communicate with other devices, and the processor is configured to call and execute the computer program stored in the memory to cause the communication device to perform the above-described relay communication method.

An embodiment of the present application provides a chip for implementing the above-described relay communication method. Specifically, the chip includes a processor, configured to call and execute a computer program from a memory so that a device on which the chip is mounted performs the above-described relay communication method.

An embodiment of the present application provides a computer-readable storage medium for storing a computer program that, when executed by a device, causes the device to perform the above-described relay communication method.

An embodiment of the present application provides a computer program product, including computer program instructions that cause a computer to perform the above-described relay communication method.

An embodiment of the present application provides a computer program that, when running on a computer, causes the computer to perform the above-described relay communication method.

In the embodiments of the present application, based on the multi-hop relay capability information of the communication device, multi-hop relay communication can be better supported, thereby improving communication reliability and communication range.

### BRIEF DESCRIPTION OF THE DRAWINGS

FIG. 1 is a schematic diagram of an application scenario according to an embodiment of the present application.
FIG. 2a is a schematic diagram of transmission mode 3 in 3GPP.
FIG. 2b is a schematic diagram of transmission mode 4 in 3GPP.
FIG. 3 is a schematic diagram of a UE-to-UE relay.
FIG. 4 is a schematic flowchart of connection establishment for a UE-to-UE relay.
FIG. 5 is a schematic diagram of a UE architecture in a UE-to-UE relay.
FIG. 6 is a schematic flowchart of a relay communication method according to an embodiment of the present application.
FIGS. 7a, 7b, and 7c are schematic flowcharts of information interaction between devices.
FIG. 7d is a schematic diagram of a relationship among devices.
FIG. 8 is a schematic flowchart of a relay communication method according to another embodiment of the present application.
FIG. 9 is a schematic flowchart of a relay communication method according to another embodiment of the present application.
FIGS. 10a, 10b, and 10c are schematic flowcharts of information interaction among devices.
FIG. 11 is a schematic flowchart of a relay communication method according to another embodiment of the present application.
FIG. 12 is a schematic flowchart of a relay communication method according to another embodiment of the present application.
FIG. 13 is a schematic flowchart of a relay communication method according to another embodiment of the present application.
FIG. 14 is a schematic flowchart of a relay communication method according to another embodiment of the present application.
FIG. 15 is a schematic flowchart of a relay communication method according to another embodiment of the present application.
FIG. 16 is a schematic flowchart of a relay communication method according to another embodiment of the present application.
FIG. 17 is a schematic flowchart of a relay communication method according to another embodiment of the present application.
FIGS. 18a to 18f are schematic flowcharts of examples in a multi-hop relay link.
FIG. 19 is a schematic block diagram of a first communication device according to an embodiment of the present application.
FIG. 20 is a schematic block diagram of a second communication device according to an embodiment of the present application.
FIG. 21 is a schematic block diagram of a first communication device according to an embodiment of the present application.
FIG. 22 is a schematic block diagram of a second communication device according to an embodiment of the present application.
FIG. 23 is a schematic block diagram of a communication device according to an embodiment of the present application.
FIG. 24 is a schematic block diagram of a chip according to an embodiment of the present application.
FIG. 25 is a schematic block diagram of a communication system according to an embodiment of the present application.

### DETAILED DESCRIPTION

Hereinafter, the technical solutions in the embodiments of the present application will be described with reference to the drawings in the embodiments of the present application.

The technical solutions of the embodiments of the present application may be applied to various communication systems, such as: a Long Term Evolution (LTE) system, an Advanced long term evolution (LTE-A) system, a New Radio (NR) system, an evolution system of an NR system, an LTE-based access to unlicensed spectrum (LTE-U) system on an unlicensed spectrum, and an NR-based access to unlicensed spectrum (NR-U) system on an unlicensed spectrum, a Non-Terrestrial Networks (NTN) system, a Universal Mobile Telecommunication System (UMTS), Wireless Local Area Networks (WLAN), Wireless Fidelity (Wi-Fi), Fifth-Generation (5G) systems or other communication systems, etc.

Generally speaking, the conventional communication system supports a limited number of connections and is easy to implement. However, with the development of communication technologies, mobile communication systems will support not only conventional communications, but also may support, for example, device-to-device (D2D) communication, machine-to-machine (M2M) communication, Machine Type Communication (MTC), vehicle-to-vehicle (V2V) communication, or vehicle-to-everything (V2X) communication, and the like, and the embodiments of the present application may also be applied to these communication systems.

In one implementation, the communication system in the embodiment of the present application may be applied to a Carrier Aggregation (CA) scenario, a Dual Connectivity (DC) scenario, and a Standalone (SA) network layout scenario.

In one implementation, the communication system in the embodiment of the present application may be applied to an unlicensed spectrum, and the unlicensed spectrum may be considered as a shared spectrum. Optionally, the communication system in the embodiment of the present application may also be applied to a licensed spectrum, and the licensed spectrum may also be considered as a non-shared spectrum.

Embodiments of the present application describe various embodiments in connection with a network device and a terminal device. The terminal device may also be referred to as a User Equipment (UE), an access terminal, a subscriber unit, a subscriber station, a mobile station, a mobile platform, a remote station, a remote terminal, a mobile device, a user terminal, a terminal, a wireless communication device, a user agent or a user device, and the like.

The terminal device may be a STAION (ST) in a WLAN, a cellular telephone, a cordless telephone, a Session Initiation Protocol (SIP) telephone, a Wireless Local Loop (WLL) station, a Personal Digital Assistant (PDA) device, a handheld device with wireless communication functionality, a computing device or other processing devices connected to a wireless modem, an in-vehicle device, a wearable device, a terminal device in a next generation communication system such as an NR network, or a terminal device in a future evolved Public Land Mobile Network (PLMN) network, etc.

In an embodiment of the present application, the terminal device may be deployed on land, including indoor or outdoor environments, or may be handheld, wearable, or vehicle-mounted. The terminal device may also be deployed on water surfaces (such as ships, etc.), or in the air (e.g. on aircraft, balloons and satellites, etc.).

In an embodiment of the present application, the terminal device may be a Mobile Phone, a pad, a computer with wireless transceiver functions, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in embodiments of the present application, the terminal device may also be a wearable device. Wearable devices may also be called wearable smart devices, which are a general term for devices that are developed by applying wearable technology to intelligently design daily wearable devices, such as glasses, gloves, watches, clothing and shoes. Wearable devices are portable devices that are worn directly on the body or integrated into the user's clothes or accessories. The wearable devices are not only hardware devices, but also realize powerful functions through software support, data interaction and cloud-based interaction. Generalized wearable smart devices include devices that have fully functionalities and large size and may operate independently of smart phones to perform complete or partial functions, such as smart watches or smart glasses, as well as devices that only focus on a certain type of application functions and need to be used in conjunction with other devices like smart phones, such as various smart bracelets or smart jewelry for physical sign monitoring.

In an embodiment of the present application, the network device may be a device for communicating with mobile devices. The network device may be an Access Point (AP) in a WLAN, an Evolutionary Node B (eNB or eNodeB) in LTE, or a relay station or an Access Point, or a vehicle-mounted device, a wearable device, a network device (gNB) in an NR network, a network device in a future evolved PLMN network, or a network device in an NTN network, etc.

By way of example and not limitation, in embodiments of the present application, the network device may have mobility characteristics, for example, the network device may be a movable device. Optionally, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Optionally, the network device may be a base station provided on land, in water areas, or the like.

In an embodiment of the present application, the network device may provide services for a cell, and terminal devices communicate with the network device through transmission resources (for example, frequency domain resources, or spectrum resources) used by the cell. The cell may be a cell corresponding to the network device (for example, a base station). The cell may belong to a macro base station, or a base station corresponding to a Small cell, and the Small cell may include a Metro cell, a Micro cell, a Pico cell, a Femto cell, etc. These small cells have characteristics of small coverage range and low transmission power, and are suitable for providing high-speed data transmission services.

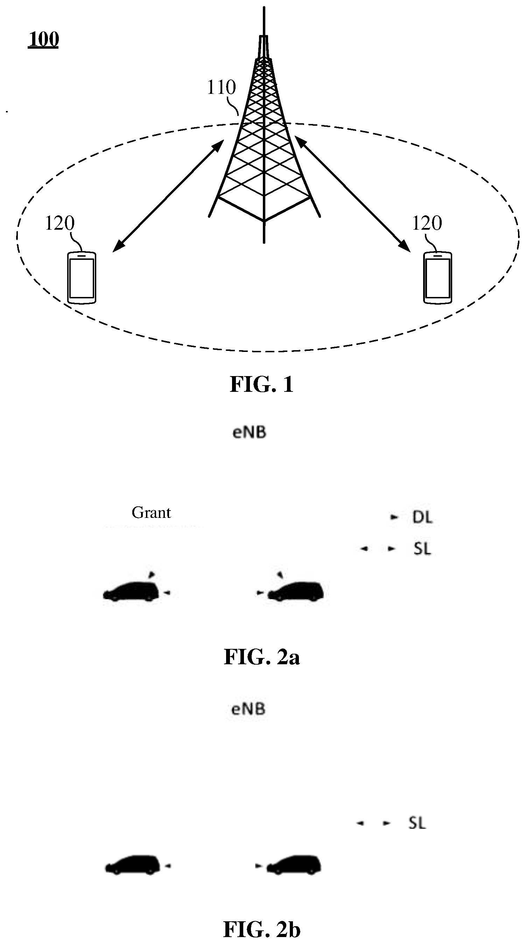

FIG. 1 exemplarily illustrates a communication system 100. The communication system includes a network device 110 and two terminal devices 120. In one implementation, the communication system 100 may include a plurality of network devices 110, and another number of terminal devices 120 may be included in the coverage range of each network device 110, which is not limited in the embodiments of the present application.

In one implementation, the communication system 100 may further include other network entities such as a Mobility Management Entity (MME), an Access and Mobility Management Function (AMF), and the like, but the embodiments of the present application are not limited thereto.

Herein, the network device may also include an access network device and a core network device. That is, the wireless communication system further includes multiple core networks for communicating with access network devices. The access network device may be eNB or e-NodeB macro base station, a micro base station (also referred to as a "small base station"), a Pico base station, an access point (AP), a transmission point (TP) or a new generation Node B (gNodeB) or the like in a long-term evolution (LTE) system, a next generation (NR) system or an authorized auxiliary access long-term evolution (LAA-LTE) system.

It should be understood that devices having communication functions in the network/system in the embodiments of the present application may be referred to as communication devices. Taking the communication system illustrated in FIG. 1 as an example, the communication devices may include a network device and terminal devices having communication functions, and the network device and the terminal devices may be specific devices in the embodiments of the present application, and will not be described herein. The communication devices may also include other devices in the communication system, such as other network entities such as a network controller and a mobility management entity, which is not limited in the embodiments of the present application.

It is to be understood that the terms "system" and "network" are often used interchangeably herein. Herein, the term "and/or" is only an association relationship describing related objects, and means that there may be three relationships, for example, A and/or B may mean that A alone exists, A and B simultaneously exist, and B alone exists. In addition, the character "/" herein generally indicates that the related objects before and after this character are in an "or" relationship.

It should be understood that the "indication" mentioned in the embodiments of the present application may be direct or indirect indication, or may represent existence of an associated relationship. For example, A indicates B, which may mean that A directly indicates B, for example, B may be acquired by A, or it may mean that A indicates B indirectly, for example, A indicates C, or B may be obtained through C, or it may also mean that there is an association relationship between A and B.

In the description of the embodiments of the present application, the term "correspondence" may indicate that there is a direct or indirect correspondence relationship between two objects, or it may indicate that there is a correlation relationship between the two, or may indicate a relationship between indicating and being instructed, configuring and being configured, or the like.

In order to facilitate understanding of the technical solutions of the embodiments of the present application, related technologies of the embodiments of the present application will be described below, and the related technologies below may be arbitrarily combined with the technical solutions of the embodiments of the present application as optional solutions, all of which belong to the scope of protection of the embodiments of the present application.

### I. Long Term Evolution (LTE) Device to Device (D2D)/V2X

Device-to-device communication is a Sidelink (SL) transmission technology based on D2D. Unlike traditional cellular systems in which communication data is received or transmitted through a base station, V2X systems adopt a terminal-to-terminal direct communication method, so it has higher spectral efficiency and lower transmission delay.

3GPP includes two transmission modes: Mode 3 and Mode 4.

Mode 3: As shown in FIG. 2a, transmission resources for a terminal are allocated by a base station, and the terminal transmits data on a sidelink according to the resources allocated by the base station. The base station may allocate resources for single transmission to the terminal, or may allocate resources for semi-static transmission to the terminal.

Mode 4: As shown in FIG. 2b, the vehicle-mounted terminal selects one resource in the resource pool to transmit data.

In 3GPP, D2D includes different stages:
(1) Proximity based Service (ProSe): In Releases 12/13 (Rel-12/13), device-to-device communication was studied for ProSe scenarios, mainly targeting public safety-related services.
   In ProSe, by configuring the time-domain positions of the resource pool, for example, the resource pool is discontinuous in the time domain, UE can discontinuously transmit/receive data on the sidelink, thereby achieving power-saving effects.
(2) Vehicle to everything (V2X): In Rel-14/15, the V2X systems were studied for vehicle-to-vehicle communication scenarios, mainly oriented to relatively high-speed vehicle-to-vehicle and vehicle-to-pedestrian communication services;
   In V2X, since the in-vehicle system has continuous power supply, power efficiency is not a major problem, while data transmission latency is a major problem. Therefore, system design requires terminal devices to perform continuous transmission and reception.
(3) Wearable devices, Further Enhancement to Device-to-Device (FeD2D): In Rel-14, this subject studied scenarios in which wearable devices access the network through mobile phones, mainly oriented to low mobility speed and low power access scenarios.

In FeD2D, during the pre-research stage, 3GPP concluded that the base station can configure Discontinuous Reception (DRX) parameters for a remote terminal through a relay terminal. However, as this subject has not further entered the standardization stage, the specific details of how to configure DRX were not finalized.

### II. NR V2X

Building on LTE V2X, NR V2X is not limited to broadcast scenarios, but further extends to unicast and multicast scenarios, with research conducted on V2X applications under these scenarios.

Similar to LTE V2X, NR V2X also includes two resource grant modes, mode 1 and mode 2. Furthermore, the user may operate in a hybrid mode, meaning that ir can acquire resource using both Mode 1 and Mode 2 simultaneously. The resource acquisition is indicated by a sidelink grant, where the sidelink grant indicates the time-frequency positions of the corresponding Physical Sidelink Control Channel (PSCCH) and Physical Sidelink Shared Channel (PSSCH) resources.

Different from LTE V2X, in addition to feedback-free, UE-initiated Hybrid Automatic Repeat-reQuest (HARQ) retransmission, NR V2X introduces feedback-based HARQ retransmission, which applies not only to unicast communication, but also includes multicast communication.

### III. Sidelink UE-to-UE Relay Technology

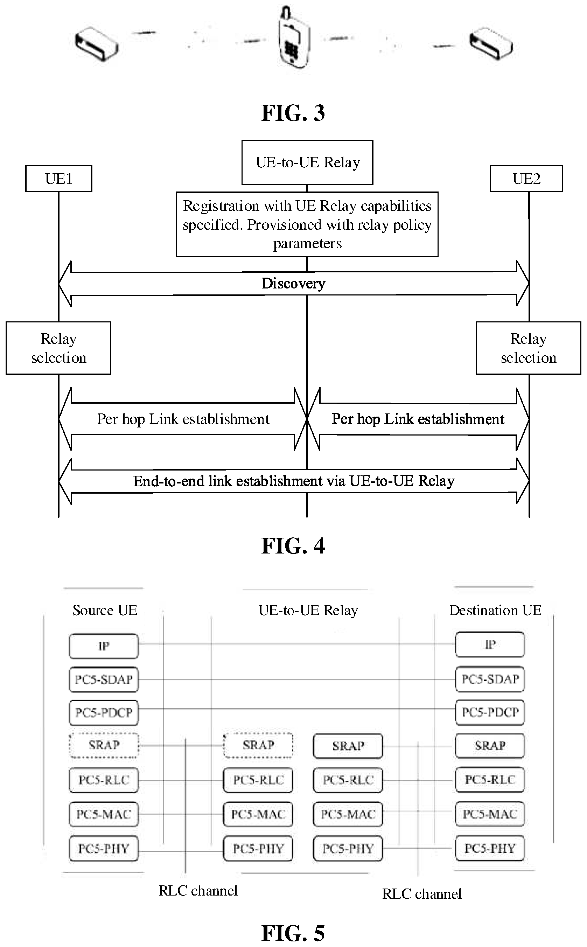

As shown in FIG. 3, in Rel-17 ProSe, 3GPP includes UE-to-UE (U2U) relay functions based on Layer 2 and Layer 3 relays. Specifically, a source UE connects to a destination UE through a relay UE, and the relay UE transmits data between the source UE and the destination UE.

A specific connection establishment step is shown in FIG. 4. The source UE, the relay UE, and the destination UE discover each other through discovery messages or Direct Communication Request (DCR) messages. The relay UE may assist the source UE in forwarding the discovery messages or the DCR messages. After the source UE and the destination UE discover each other, they can perform relay selections, select an appropriate relay to establish connections with it respectively, and then use the relay to establish end-to-end direct communication interface (PC5) connections.

3GPP Rel-17 includes a layer 2 UE-to-UE relay. As shown in FIG. 5, an adaptation layer (e.g., a Sidelink Relay Adaptation Protocol (SRAP) layer) is placed above the Radio Link Control (RLC) sub-layer for both the control plane and user plane, between the relay UE and the source UE/destination UE. The PC5-Service Data Adaptation Protocol (SDAP)/Packet Data Convergence Protocol (PDCP) and Radio Resource Control (RRC) terminate between the source UE and the destination UE, while PC5-RLC, PC5-Medium Access Control (MAC) and PC5-Physical layer (PHY) terminate in each link (i.e. the link between the source UE and the relay UE, and the link between the relay UE and the destination UE). Currently, whether the adaptation layer is also supported at the PC5 interface between the source UE and the relay UE has not been concluded.

Examples for L2 UE-to-UE relay are as follows:
(1) The adaptation layer in the relay terminal supports sidelink bearer mapping between accessing PC5 RLC channels. For sidelink relay services, different end-to-end bearers (e.g., Signaling Radio Bearers (SRBs) and Data Radio Bearers (DRBs)) from the same remote UE and/or different remote UEs can be mapped N: 1 onto one PC5 RLC channel for data multiplexing.
(2) The adaptation layer is used to support terminal identification for sidelink services (to multiplex data from multiple terminals). The PC5 radio bearers and identification information of the terminal are included in the adaptation layer so that the destination terminal associates the received data packets of a specific PDCP entity with the radio bearers of the source terminal.

### IV. UE-to-network relay

A remote terminal performs measurement reporting, where information such as a relay terminal identification, a serving cell identification and a Reference signal received power (RSRP) measurement result is included in the measurement reporting information. When the remote terminal performs link handover from an indirect link to a direct link, the serving relay terminal may use the SL-RSRP to perform sidelink measurements. When a remote terminal performs link handover from a direct link to an indirect link, Sidelink Discovery (SD)-RSRP may be used to perform sidelink measurements. In addition, when measurement reporting is performed, two new measurement reporting trigger events are defined for terminal-to-network relay handover. Event 1: when the link quality of the serving relay terminal is lower than the configured threshold value, and optionally, the link quality of the neighboring cell is higher than the configured threshold value, the remote terminal performs measurement reporting. Event 2: when the link quality of the serving cell is lower than the configured threshold value and the link quality of the relay terminal is higher than the configured threshold value, the remote terminal performs measurement reporting. In addition, in order to assist the remote terminal in performing direct link to indirect link handover, a new timer is introduced. When the remote terminal receives an RRC reconfiguration message indicating direct link to indirect link handover, the remote terminal starts a timer. When the timer expires, the remote terminal performs RRC re-establishment.

The relevant U2U/U2N relays basically operate in a single-hop scenario, for example, from a source UE to a destination UE or gNB via a relay UE. Embodiments of the present application may further enhance coverage through multi-hop relay, for example, from the source UE to the destination UE or gNB via a multi-hop relay UE such as relay UE 1, relay UE 2, etc.

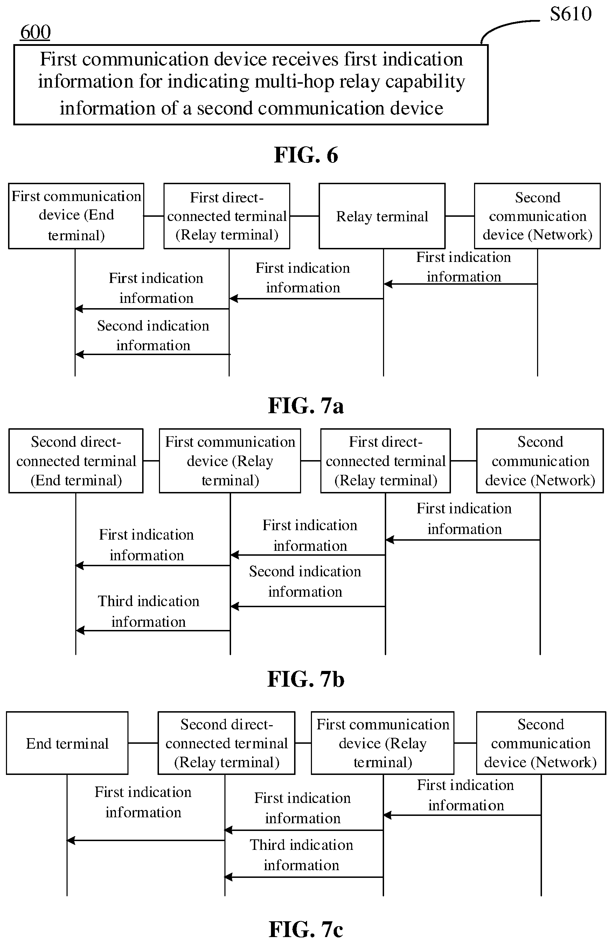

FIG. 6 is a schematic flowchart of a relay communication method 600 according to an embodiment of the present application. The method may optionally be applied to the systems shown in FIGS. 1 to 5, but is not limited thereto. The method includes at least part of the following operation S610.

In S610, a first communication device receives first indication information for indicating multi-hop relay capability information of a second communication device.

In an embodiment of the present application, in a wireless communication scenario, two or more relay terminals may be included in a multi-hop relay link. In the multi-hop relay link according to the embodiment of the present application, a terminal may act as a relay. The wireless communication scenario according to the embodiment of the present application may include a scenario where sidelink communication is supported. The first communication device may be a relay terminal or an end terminal in the multi-hop relay link. The second communication device may be a network device or an end terminal in the multi-hop relay link. Herein, the end terminal may be located at the edge of the multi-hop relay link, and the end terminal may also be referred to as a remote terminal, an edge terminal, or the like. The end terminal may include a source terminal and/or a destination terminal. The multi-hop trunk link may be a U2U relay link or a U2N relay link. For example, in the U2U relay link, the first communication device may be a source terminal, a relay terminal, or a destination terminal. In the U2N relay link, the first communication device may be a remote terminal or a relay terminal. The first communication device may obtain the multi-hop relay capability information of the second communication device based on the received first indication information.

As shown in FIG. 7a, if the first communication device is an end terminal, the end terminal may receive the first indication information from another relay terminal.

As shown in FIG. 7b, if the first communication device is a relay terminal, the relay terminal may receive the first indication information from another relay terminal or network device.

As shown in FIG. 7c, if the first communication device is a relay terminal and the second communication device is a destination terminal, the relay terminal may receive the first indication information from another relay terminal or destination terminal. Further, if the first communication device is a source terminal and the second communication device is a destination terminal, the source terminal may receive the first indication information from another relay terminal.

In the embodiment of the present application, based on the multi-hop relay capability information of communication devices, multi-hop relay communication can be better supported, thereby improving communication reliability and communication range.

In an implementation, the multi-hop relay capability information comprises at least one of:
whether multi-hop relay is supported;
hop number requirement;
signal quality requirement; or
correspondence between hop numbers and signal quality requirements.

In the embodiment of the present application, one or more pieces of information in the above examples of the multi-hop relay capability information may be carried by the same message or different messages. The one or more pieces of information above may be combined with each other or may be used separately.

For example, if the first indication information indicates that a network supports multi-hop relay, a terminal device receiving the first indication information may access the network as a relay terminal or communicate with the network via other relay terminals. If the first indication information indicates that a network does not support multi-hop relay, a terminal device receiving the first indication information may not access the network through more than one relay terminal or not communicate with the network through more than one other relay terminal, or may not access the network as a multi-hop relay terminal itself.

For another example, if the first indication information indicates that the hop number requirement for the network is not greater than 3, and other quality requirements include that the SL RSRP needs to meet a set threshold, it may be determined whether the actual hop number exceeds the hop number requirement. If the actual hop number is less than or equal to the hop number requirement, it may indicate that the hop number requirement is met. Or, it may also be determined whether the measured SL RSRP exceeds a set threshold or the like may be determined, and if the SL RSRP is greater than or equal to the set threshold, it may indicate that the signal quality requirement is met.

For another example, if the correspondence between hop numbers and signal quality requirements includes that: hop1 corresponds to the quality requirement A, and hop2 corresponds to the quality requirement B, the first communication device may search for a signal quality requirement corresponding to a current hop number based on the current hop number and the correspondence between hop numbers and signal quality requirements, and the current hop number of itself or the direct-connected terminal, and determines, based on the signal quality requirement, whether the signal quality of the current hop number of the first communication device meets the quality requirement.

In one implementation, the hop number requirement includes at least one of the following: a maximum number of hops supported; a maximum number of hops supported for different services; or a maximum number of hops supported for different service priorities.

For example, if the first indication information indicates that the maximum number of hops supported by the network is 3, the number of hops corresponding to the first communication device is less than or equal to 3, which may meet hop number requirement, and the hop number requirement may not be met if the number of hops is greater than 3. For another example, if the first indication information indicates that the maximum number of hops supported for service 1 is 4, the number of hops corresponding to the first communication device is less than or equal to 4, which meets the hop number requirement; and the hop number requirement is not met if the number of hops corresponding to the first communication device is greater than 4. For another example, if the first indication information indicates that the maximum number of hops supported for service priority 1 is 5, the number of hops corresponding to the first communication device is less than or equal to 5, which meets the hop number requirement; and the hop number requirement is not met if the number of hops corresponding to the first communication device is greater than 5.

In one implementation, the signal quality requirement comprises at least one of: an air interface (Uu) RSRP condition; Uu RSRP threshold; an SL RSRP condition; SL RSRP threshold; a Uu reference signal reception quality (RSRQ) condition; Uu RSRQ threshold; an SL RSRQ condition; or SL RSRQ threshold. In an embodiment of the present application, the channel quality-related measurement quantity may include RSRP, RSRQ, and the like. Different types of measurement quantities may have corresponding thresholds and/or conditions. In some scenarios, the condition may include a threshold. For example, a certain SL RSRP condition includes that the SL RSRP is greater than an SL RSRP threshold.

In one implementation, the first indication information is carried by at least one of: a broadcast message, an RRC message. For example, the broadcast message may include a system message such as a System Information Block (SIB).

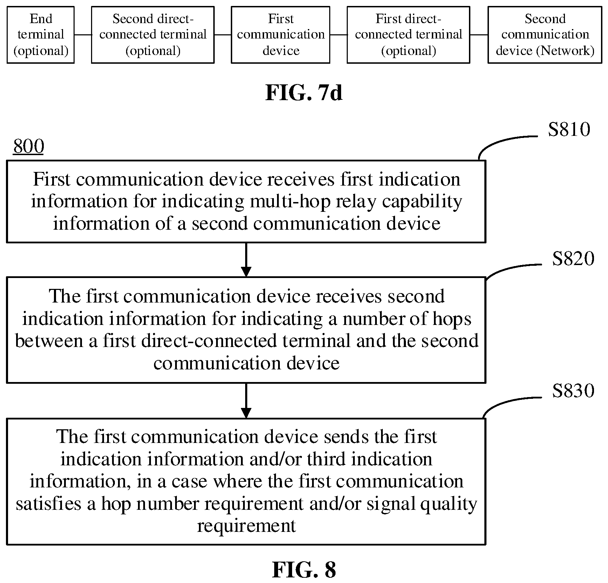

FIG. 8 is a schematic flowchart of a relay communication method 800 according to another embodiment of the present application. The method may include the following operation S810.

At S810, a first communication device receives first indication information for indicating multi-hop relay capability information of a second communication device, reference to the details of which may be made to the related description of operation S610.

In one implementation, as shown in FIG. 8, the method further includes operation S820

At S820, the first communication device receives second indication information for indicating the number of hops between a first direct-connected terminal and the second communication device.

In one implementation, a direct communication link exists between the first direct-connected terminal and the first communication device, and the first direct-connected terminal is capable of accessing the second communication device via a direct or non-direct communication link. As shown in FIG. 7d, an example of the relationship between various devices is as follows. In some scenarios, the first communication device may be connected to the network device via the first direct-connected terminal, or may be directly connected to a network device. In some scenarios, the first communication device may be connected to an end terminal via a second direct-connected terminal, or may be directly connected to the end terminal. In some scenarios, the first communication device may be an end terminal.

In the embodiment of the present application, the hop number may be counted in a variety of manners. For example, the hop number may be counted starting from 0 for the first hop from a certain terminal or network device, increased by 1 each time; or starting from 10 and increased by 10 each time. There are also other counting manners, which are not limited herein.

For example, as shown in FIG. 7a, the first communication device is an end terminal such as a source terminal, the second communication device is a network device or a destination terminal, and the second indication information received by the first communication device from the first direct-connected terminal may indicate the number of hops between the first direct-connected terminal and the network device, assuming that it is 2. If the maximum number of hops supported by the second communication device is 3, it may be determined that the number of hops indicated by the second indication information meets the hop number requirement. The number of hops corresponding to the first communication device may be calculated based on the number of hops indicated by the second indication information. For example, if the number of hops indicated by the second indication information is 2, the number of hops between the first communication device and the second communication device may be 3. If the number of hops between the first direct-connected terminal and the second communication device or the number of hops between the first communication device and the second communication device meets the hop number requirement and/or the quality requirement corresponding to the hop number, the end terminal may access the second communication device via the first direct-connected terminal and/or another relay.

In one implementation, the method further includes operationsS830.

At S830, when the first communication device satisfies the hop number requirement and/or the signal quality requirement, the first communication device transmits the first indication information and/or third indication information.

In one implementation, the third indication information is used to indicate an associated hop number of the first communication device, and the associated hop number of the first communication device includes at least one of the following: a number of hops between the first communication device and the second communication device, or a maximum number of hops supported by the second communication device. For example, the associated number of hops of the first communication device may include the number of hops between the first communication device and the second communication device, may include the number of hops between the first communication device and the second device plus 1, and may include the maximum number of hops M supported by the second communication device.

For example, as shown in FIG. 7b, the first communication device is a relay terminal, the second communication device is a network device or a destination terminal, and the second indication information received by the first communication device from the first direct-connected terminal may indicate the number of hops between the first direct-connected terminal and the network device, assuming that it is 1. If the maximum number of hops supported by the second communication device is 3, it may be determined that the number of hops indicated by the second indication information meets the hop number requirement. The number of hops between the first communication device and the second communication device may be calculated based on the number of hops indicated by the second indication information. For example, if the number of hops indicated by the second indication information is 1, the number of hops between the first communication device and the second communication device may be 2, which meets the hop number requirement. If the quality of a link between the first communication device and the first direct-connected terminal meets the quality requirement corresponding to the hop number, the first communication device (relay terminal) may send the first indication information and/or the third indication information to the second direct-connected terminal (end terminal or another relay terminal). Herein, a direct communication link exists between the second direct-connected terminal and the first communication device, and the second direct-connected terminal may access the second communication device via a direct or non-direct communication link.

For example, as shown in FIG. 7c, the first communication device is a relay terminal, and the first communication device is directly connected to the second communication device. The first indication information received by the first communication device from the second communication device may indicate capability information of the second communication device. If the maximum number of hops supported by the second communication device is 3, it may be determined that the number of hops 1 between the first communication device and the second communication device meets the hop number requirement. The first communication device (relay terminal) may send the first indication information and/or the third indication information to the second direct-connected terminal (end terminal or another relay terminal) if the number of hops between first communication device and the second communication device satisfies the hop number requirement or the quality requirement corresponding to the hop number.

In one implementation, the second indication information or the third indication information is carried by at least one of a discovery message, a PC5-RRC message, a PC5-Signalling (PC5-S) message, a broadcast-transmitted network configuration message, or a broadcast-forwarded network configuration message.

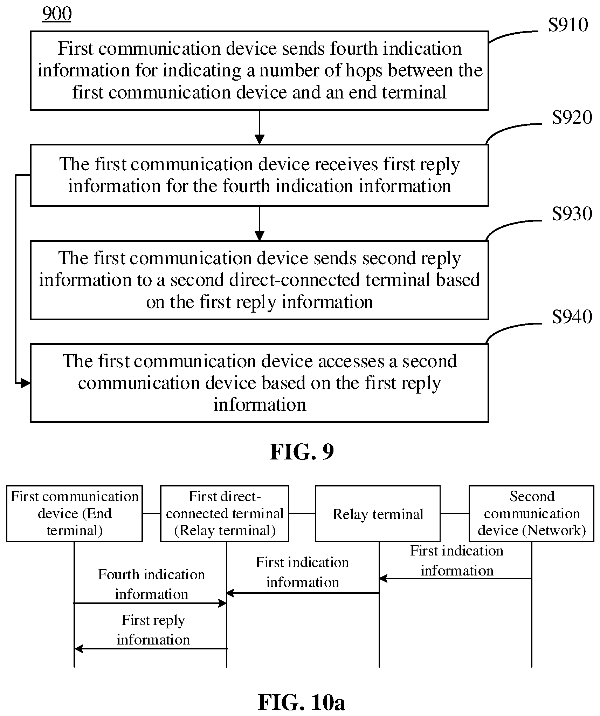

FIG. 9 is a schematic flowchart of a relay communication method 900 according to another embodiment of the present application. The method may include one or more features of the methods described above. In one implementation, the method further includes operation S910.

At S910, the first communication device sends fourth indication information for indicating the number of hops between the first communication device and an end terminal.

As shown in FIG. 10a, the fourth indication information sent by the first communication device (end terminal) to the first direct-connected terminal indicates that the number of hops between the first communication device and the end terminal is 0. The first direct-connected terminal may calculate that the number of hops between itself and the end terminal is 1.

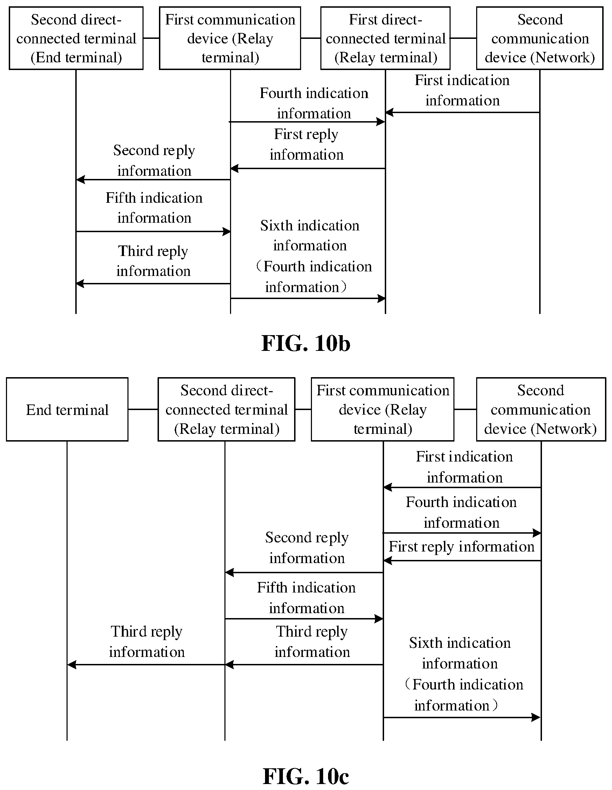

As shown in FIG. 10b, the fourth indication information sent by the first communication apparatus (relay terminal) to the first direct-connected terminal that the number of hops between the first communication device and an end terminal is 1. The first direct-connected terminal may calculate that the number of hops between itself and the end terminal is 2.

As shown in FIG. 10c, the fourth indication information sent by the first communication device (relay terminal) to the second communication device may also indicate that the number of hops between the first communication device and an end terminal indicated is 2. The second communication device may calculate that the number of hops between itself and the end terminal is 3.

In one implementation, the method further includes operation S920.

At S920, the first communication device receives first reply information for the fourth indication information. The device that receives the fourth instruction information, for example, the first direct connection terminal or the second communication device, may determine whether the first communication device or the second direct-connected terminal meets the hop number requirement, the quality requirement, or the like, based on the number of hops or the like indicated in the fourth instruction information. Therefore, the first reply information may include information about whether the first communication device meets the hop number requirement, the quality requirement, and the like. The following takes the hop number requirement as an example for illustration, and the principle of the signal quality requirement corresponding to the hop number is similar thereto.

As shown in FIG. 10a, the first communication device (end terminal) receives the first reply information transmitted by the first direct-connected terminal. Assuming that the number of hops between the end terminal and the first direct-connected terminal is 1, the maximum number of hops supported by the second communication device is 3. If the number of hops between the first direct-connected terminal and the second communication device is 2, then the first reply information includes that the first communication device meets the hop number requirement. If the number of hops between the first direct-connected terminal and the second communication device is 3, the first reply information includes that the first communication device does not meet the hop number requirement.

As shown in FIG. 10b, the first communication device (relay terminal) receives the first reply information transmitted by the first direct-connected terminal. Assuming that the number of hops between the end terminal and the first direct-connected terminal is 2, the maximum number of hops supported by the second communication device is 3. If the number of hops between the first direct-connected terminal and the second communication device is 1, then the first reply information includes that the first communication device meets the hop number requirement (the second direct-connected terminal also meets the hop number requirement). If the number of hops between the first direct-connected terminal and the second communication device is greater than 1, then the first reply information includes that the first communication device does not meet the hop number requirement.

As shown in FIG. 10c, the first communication device (relay terminal) receives the first reply information transmitted by the second communication device. Assuming that the number of hops between the end terminal and the first communication device is 2, the maximum number of hops supported by the second communication device is 3. If the number of hops between the first communication device and the second communication device is 1, then the first reply information includes that the first communication device meets the hop number requirement. If the number of hops between the first communication device and the second communication device is greater than 1, then the first reply information includes that the first communication device does not meet the hop number requirement.

In one implementation, the method further includes operation S930.

At S930, the first communication device sends second reply information to a second direct-connected terminal based on the first reply message.

In one implementation, a direct communication link exits between the second direct-connected terminal and the first communication device, and the second direct-connected terminal may access an end terminal via a direct or non-direct communication link. The second reply information may be used to inform the second direct-connected terminal whether the first communication device or the second direct-connected terminal meets the hop number requirement and/or the signal quality requirement. If the first reply information indicates that the first communication device or the second direct-connected terminal meets the hop number requirement and/or the signal quality requirement, the second reply information may indicate that the first communication device or the second direct-connected connection terminal meets the hop number requirement and/or the signal quality requirement. Otherwise, the second reply information may indicate that the first communication device or the second direct-connected terminal does not meet the hop number requirement and/or the signal quality requirement.

As shown in FIG. 10b, after receiving the first reply information transmitted by the first direct-connected terminal, the first communication device (relay terminal) may send the second reply information to the second direct-connected terminal (end terminal) based on the first reply information.

As shown in FIG. 10c, after receiving the first reply information transmitted by the second communication device, the first communication device (relay terminal) may send the second reply information to the second direct-connected terminal (relay terminal) based on the first reply information.

In one implementation, the method further includes operation S940.

At S940, the first communication device accesses the second communication device based on the first reply information. In some scenarios, the first communication device may be an end terminal. As shown in FIG. 10a, the first communication device (end terminal) may access the second communication device (network device) via a plurality of relay terminals based on the first reply information.

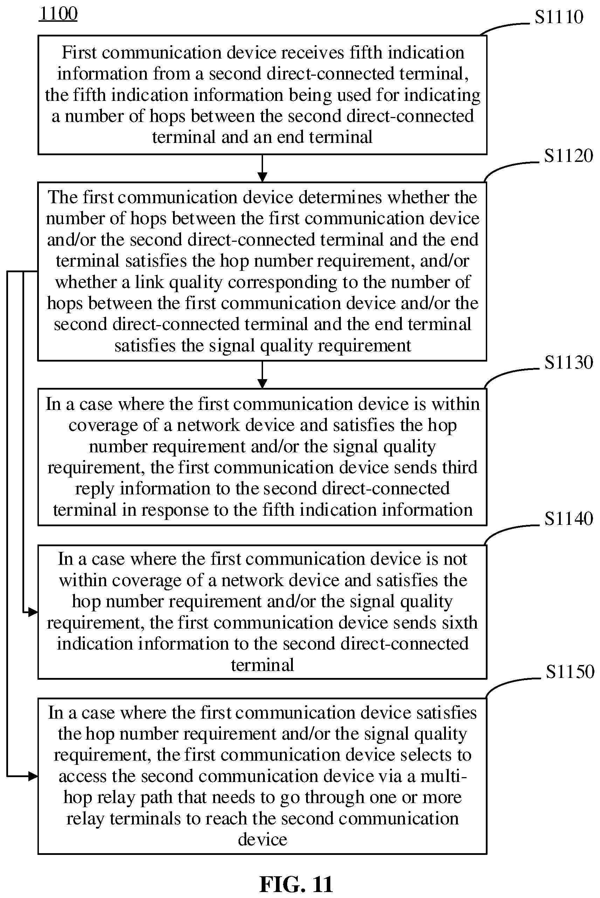

FIG. 11 is a schematic flowchart of a relay communication method 1100 according to another embodiment of the present application. The method may include one or more features of the methods described above. In one embodiment, the method further includes operation S1110.

At S1110, the first communication device receives fifth indication information from the second direct-connected terminal, and the fifth indication information is used to indicate the number of hops between the second direct-connected terminal and an end terminal.

In one implementation, a direct communication link exists between the second direct-connected terminal and the first communication device, and the second direct-connected terminal is capable of accessing the end terminal via a direct or a non-direct communication link.

In one implementation, the method further includes operation S1120.

At S1120, the first communication device determines whether the number of hops between the first communication device and/or the second direct-connected terminal and the end terminal meets the hop number requirement, and/or whether the link quality corresponding to the number of hops between the first communication device and/or the second direct-connected connection terminal and the end terminal meets the signal quality requirement.

In an embodiment of the present application, the first communication device may determine whether the number of hops between the first communication device and/or the second direct-connected terminal and the end terminal meets the hop number requirement based on the fifth indication information. For example, the first communication device determines whether the number of hops N between the second direct-connected terminal and the end terminal is less than the required number of hops M. For another example, the first communication device determines whether the hop number N+1 between itself and the end terminal is less than the hop number requirement M.

As shown in FIG. 10b, the first communication device (relay terminal) obtains, based on the fifth indication information, that the number of hops between the second direct-connected terminal and the end terminal is 0, and the number of hops between the first communication device and the end terminal is 1. It is assumed that the maximum number of hops supported by the second communication device is 3. If the number of hops between the first communication device and the second communication device is 2, the first reply information includes that the first communication device meets the hop number requirement. If the number of hops between the first communication device and the second communication device is greater than 2, the first reply information includes that the first communication device does not meet the hop number requirement.

As shown in FIG. 10c, the number of hops between the second direct-connected terminal and an end terminal obtained by the first communication device (relay terminal) based on the fifth indication information is 1, and the number of hops between the first communication device and the end terminal is 2. It is assumed that the maximum number of hops supported by the second communication device is 3. If the number of hops between the first communication device and the second communication device is 1, the first reply information includes that the first communication device meets the hop number requirement. If the number of hops between the first communication device and the second communication device is greater than 1, the first reply information includes that the first communication device does not meet the hop number requirement.

In one implementation, the method further includes operation S1130.

At S1130, when the first communication device is within coverage of a network device and satisfies the hop number requirement and/or the signal quality requirement, the first communication device sends third reply information to the second direct-connected terminal for the fifth indication information. The third reply information may be used to inform the second direct-connected terminal whether the first communication device or the second direct-connected terminal meets the hop number requirement and/or the signal quality requirement. If the first communication device determines that the first communication device or the second direct-connected terminal meets the hop number requirement and/or the signal quality requirement based on the fifth indication information, the third reply information may indicate that the first communication device or the second direct-connected terminal meets the hop number requirement and/or the signal quality requirement. Otherwise, the third reply information may indicate that the first communication device or the second direct-connected terminal does not meet the hop number requirement and/or the signal quality requirement.

As shown in FIG. 10c, after receiving the fifth instruction information sent by the second direct-connected terminal (relay terminal), the first communication device (relay terminal) within the coverage of the network device may send the third reply information to the second direct-connected terminal (relay terminal). The second direct-connected terminal (relay terminal) may forward the third reply information to other relay terminals in the direction of the end terminal.

As shown in FIG. 10b, after receiving the fifth instruction information transmitted by the second direct connection terminal (end terminal), the first communication device (relay terminal) outside the coverage of the network device may also send the third reply information to the second direct-connected terminal (end terminal).

In one implementation, the method further includes operation S1140.

At S1140, when the first communication device is not within the coverage of the network device and satisfies the hop number requirement and/or the signal quality requirement, the first communication device sends sixth indication information to the first direct-connected terminal.

As shown in FIG. 10b, the first communication device (relay terminal) that is not within the coverage of the network device determines, based on the fifth indication information, that the first communication device and/or the second direct connection terminal satisfies the hop number requirement and/or the signal quality requirement, and may send the sixth indication information to the first direct-connected terminal.

In one implementation, the sixth indication information is used to indicate the number of hops between the first communication device and an end terminal. A direct communication link exists between the first direct-connected terminal and the first communication device, and the first direct-connected terminal can access the end terminal via a direct or non-direct communication link.

As shown in FIG. 10c, the first communication device (relay terminal) that is within the coverage of the network device determines, based on the fifth indication information, that the first communication device and/or the second direct-connected terminal satisfies the hop number requirement and/or the signal quality requirement, and may send the sixth indication information to the second communication terminal, such as a network device.

In one implementation, the fifth indication information or the sixth indication information is further used to indicate the multi-hop relay capability information of the second communication device.

In one implementation, the fifth indication information or the sixth indication information is carried by a discovery message, or a direct communication request (DCR) message.

In the embodiment of the present application, the sixth instruction information and the fourth instruction information serve similar functions, for which reference may be made to the related description. The first communication device may receive reply information for the sixth indication information from the first direct-connected terminal, which is similar in the function to the first reply information, and reference may be added to the related description.

In one implementation, the first communication device is a relay terminal and the second communication device is a network device, see FIGS. 7b and 7c.

In one implementation, the first communication device is an end terminal and the second communication device is a network device, see FIG. 7a.

In one implementation, the end terminal is outside the coverage of the network device, and there are one or more relay terminals between the end terminal and the network device.

In one implementation, the method further includes operation S1150.

At S1150, when the first communication device meets the hop number requirement and/or the signal quality requirement, the first communication device selects to access the second communication device through a multi-hop relay path that needs to go through one or more relay terminals. For example, as shown in FIG. 10a, the first communication device, such as an end terminal, accesses the second communication device via two relay terminals, namely, the first communication terminal and the first direct-connected terminal.

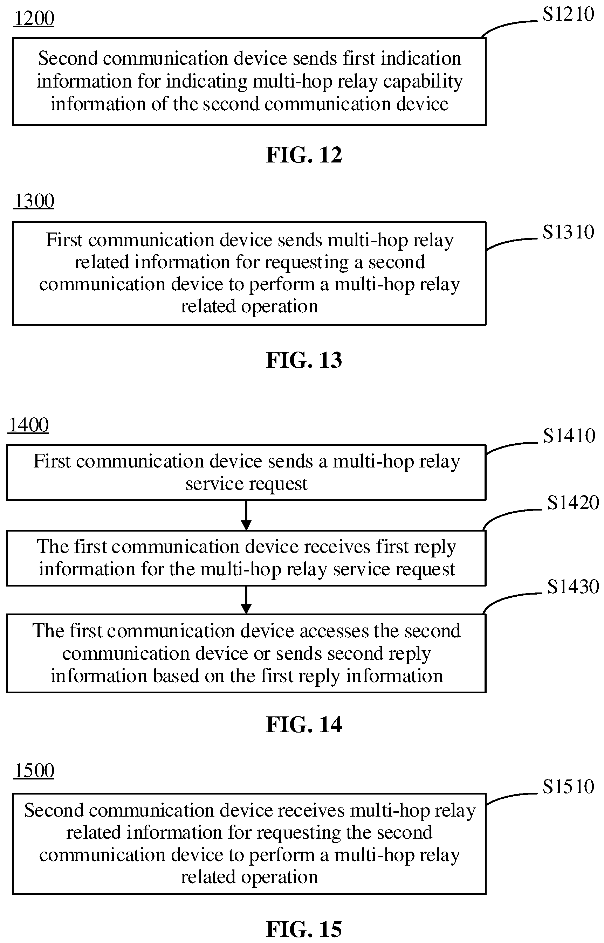

FIG. 12 is a schematic flowchart of a relay communication method 1200 according to another embodiment of the present application. The method may optionally be applied to the systems shown in FIGS. 1 to 5, but is not limited thereto. The method includes at least part of the following operation S1210.

At S1210, a second communication device sends first indication information for indicating multi-hop relay capability information of the second communication device.

In one implementation, the multi-hop relay capability information comprises at least one of the following:

whether multi-hop relay is supported; hop number requirement; signal quality requirement; or correspondence between hop numbers and signal quality requirements.

In one implementation, the hop number requirement includes at least one of the following: a maximum number of hops supported; a maximum number of hops supported for different services; or a maximum number of hops supported for different service priorities.

In one implementation, the signal quality requirement comprises at least one of the following: a Uu RSRP condition; Uu RSRP threshold; an SL RSRP condition; SL RSRP threshold; a Uu RSRQ condition; Uu RSRQ threshold; an SL RSRQ condition; or SL RSRQ threshold.

In one implementation, the first indication information is carried by at least one of: a broadcast message, or an RRC message.

In one implementation, the first communication device is a relay terminal and the second communication device is a network device.

In one implementation, the first communication device is an end terminal and the second communication device is a network device.

In one implementation, the end terminal is outside coverage of the network device, and there are one or more relay terminals between the end terminal and the network device.

A specific example of the second communication device performing the method 1200 of the embodiment may be referred to the related description of the second communication device in the above-described methods 600, 800, 900, and 1000, and will not be repeated here for the sake of brevity.

FIG. 13 is a schematic flowchart of a relay communication method 1300 according to another embodiment of the present application. The method may optionally be applied to the systems shown in FIGS. 1 to 5, but is not limited thereto. The method includes at least part of the following operation S1310.

At S1310, a first communication device sends multi-hop relay related information for requesting a second communication device to perform a multi-hop relay related operation.

In an embodiment of the present application, in a wireless communication scenario, two or more relay terminals may be included in a multi-hop relay link. In the multi-hop relay link according to the embodiment of the present application, a terminal may act as a relay. The wireless communication scenario according to the embodiment of the present application may include a scenario where sidelink communication is supported. The first communication device may be a relay terminal or an end terminal in the multi-hop relay link. The second communication device may be a network device or an end terminal in the multi-hop relay link. For example, the second communication device may be a network device as an endpoint in a U2N relay link, or may be a network device that communicates with a certain terminal device in the U2U relay link.

In one implementation, the multi-hop relay related information includes registration request information for indicating the second communication device to perform multi-hop relay authentication of the first communication device based on the registration request information. In the embodiment of the present application, the registration request information may also be referred to as authentication request information, verification request information, or the like.

In one implementation, the registration request information includes a to-be-authenticated relay role and/or relay capability of the first communication device. Herein, the relay role may represent a role that the first communication device plays in the multi-hop relay link, such as an end terminal, a relay terminal, or the like. The relay capability may indicate whether the first communication device supports multi-hop relay, whether the first communication device supports multi-hop U2U relay, whether the first communication device supports multi-hop U2N relay, the maximum number of relay hops supported by the first communication device, and the like.

In one implementation, the to-be-authenticated relay role and/or relay capability of the first communication device comprises at least one of the following:
the first communication device, as an end terminal, supporting multi-hop U2U relay;
the first communication device, as an end terminal, supporting multi-hop U2N relay;
the first communication device, as a relay terminal, supporting multi-hop U2U relay;
the first communication device, as a relay terminal, supporting multi-hop U2N relay;
a maximum number of hops for multi-hop U2U relay supported by the first communication device; or
a maximum number of hops for multi-hop U2N relay supported by the first communication device.

In one implementation, information used for the multi-hop relay authentication includes subscription information, and the subscription information includes a subscribed relay role and/or relay capability for the first communication device. For example, if the second communication device receiving the registration request information is an AMF, the AMF may obtain the subscription information from a Unified Data Management (UDM) function.

In one implementation, the subscribed relay role and/or relay capability for the first communication device comprises at least one of the following:
the first communication device being subscribed as an end terminal in multi-hop U2U relay;
the first communication device being subscribed as an end terminal in multi-hop U2N relay;
the first communication device being subscribed as a relay terminal in multi-hop U2U relay; or
the first communication device being subscribed as a relay terminal in multi-hop U2N relay;
a maximum number of hops for multi-hop U2U relay subscribed by the first communication device; or
a maximum number of hops for multi-hop U2N relay subscribed by the first communication device.

In the embodiment of the present application, after the first communication device sends the registration request information to the second communication device, the second communication device may compare the subscription information and the registration request information to perform multi-hop relay authentication and obtain a multi-hop relay authentication result. If the subscription information and the registration request information are consistent, the authentication is successful. If the subscription information and the registration request information are inconsistent, the authentication fails. For example, if the first communication device is subscribed as an end terminal in the multi-hop U2U relay in the subscription information, and the first communication device, as the end terminal, supports the multi-hop U2U relay in the registration request information, then the authentication is successful. For another example, if the first communication device is subscribed as an end terminal in the multi-hop U2U relay in the subscription information, and the first communication device, as the end terminal, supports the multi-hop U2N relay in the registration request information, then the authentication fails. For another example, if the maximum number of hops of the multi-hop U2U relay subscribed by the first communication device in the subscription information is 5, and the maximum number of hops for the multi-hop U2U relay supported by the first communication device in the registration request information is 3, then the authentication is successful. For another example, if the maximum number of hops of the multi-hop U2U relay subscribed by the first communication device in the subscription information is 5, and the maximum number of hops for the multi-hop U2U relay supported by the first communication device in the registration request information is 6, then the authentication fails.

FIG. 14 is a schematic flowchart of a relay communication method 1400 according to another embodiment of the present application. The method may include one or more features of the method 1300 described above. In one implementation, the multi-hop relay related information includes a multi-hop relay service request for requesting a multi-hop relay service.

In one implementation, the first communication device transmits the multi-hop relay related information in S1310 includes operation S1410. At S1410, the first communication device transmits a multi-hop relay service request.

In one implementation, the multi-hop relay service request is carried by at least one of the following: a first message (e.g. MSG1 or MSGA) in a random access procedure; an RRC setup message; an RRC resume message; an RRC re-establishment message; sidelink terminal information; terminal assistance information; or a measurement report message.

In one implementation, the multi-hop relay service request includes at least one of the following:
a cause value of connection setup for indicating connection is set up for performing multi-hop relay service; a multi-hop relay request indication; layer 2 identification of one or more terminals on a multi-hop relay path; a total number of hops experienced by a multi-hop relay path; a number of hops associated with one or more terminals on a multi-hop relay path; a service of an end terminal; a service priority for an end terminal; a service type for an end terminal; Quality of Service (QoS) configuration for an end terminal; or signal quality of one or more hops on a multi-hop relay path.

In one implementation, the method further includes operation S1420. At S1420, the first communication device receives first reply information for the multi-hop relay service request.

In one implementation, the first reply information is used for at least one of the following:
indicating successful authorization; indicating transmission of multi-hop relay service; indicating authorization failure; indicating disconnection of multi-hop relay service connection; or configuration information for multi-hop relay service transmission.

In an embodiment of the present application, after the first communication device sends the multi-hop relay service request to the second communication device, the second communication device may execute a corresponding multi-hop relay service and return the first reply information to the first communication device according to the service execution result.

In one implementation, the first reply message is carried through at least one of: a second message (e.g. MSG2 or MSGB) in a random access procedure; a response message for an RRC setup message; a response message for an RRC resume message; a response message for an RRC re-establishment message; or an RRC reconfiguration message.

In one implementation, the method further includes operation S1430. At S1430, the first communication device accesses the second communication device or sends second reply information based on the first reply information.

In one implementation, the second reply information is used for at least one of the following:
transmission of multi-hop relay service data; disconnection of a multi-hop relay service connection; establishment of a multi-hop relay service connection; or configuration information for multi-hop relay service transmission.

In one implementation, the second reply information is carried by at least one of: a discovery message, a PC5-RRC message, or a PC5-S message.

In one implementation, the multi-hop relay related information comprises a multi-hop relay report.

In one implementation, the multi-hop relay report is carried by at least one of: an RRC message, or a measurement report message.

In one implementation, the multi-hop relay report carries at least one of the following:
Layer 2 identification of one or more relays on a multi-hop relay path;
QoS configuration of an end terminal;
split-QoS configuration of a current hop; or
signal quality of one or more hops on a multi-hop relay path.

FIG. 15 is a schematic flowchart of a relay communication method 1500 according to another embodiment of the present application. The method may optionally be applied to the systems shown in FIGS. 1 to 5, but is not limited thereto. The method includes at least part of the following operation S1510.

At S1510, a second communication device receives multi-hop relay related information for requesting the second communication device to perform a multi-hop relay related operation.

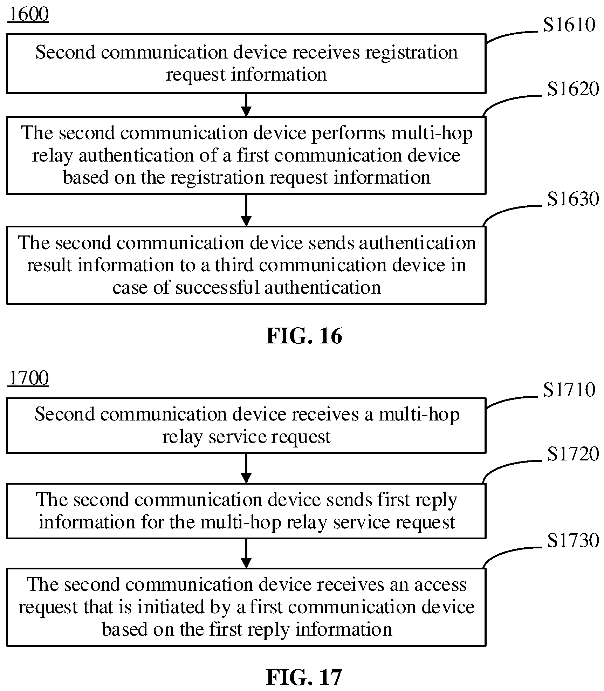

FIG. 16 is a schematic flowchart of a relay communication method 1600 according to another embodiment of the present application. The method may include one or more features of the method 1600 described above. In one implementation, the multi-hop relay related information includes registration request information.

In one implementation, the second communication device receives multi-hop relay related information at S1510 includes operation S1610. At S1610, the second communication device receives registration request information.

In one implementation, the method further includes operation S1620.

At S1620, the second communication device performs multi-hop relay authentication of the first communication device based on the registration request information.

In one implementation, the registration request information includes a to-be-authenticated relay role and/or relay capability of the first communication device.

In one implementation, the to-be-authenticated relay role and/or relay capability of the first communication device comprises at least one of the following:
the first communication device, as an end terminal, supporting multi-hop U2U relay;
the first communication device, as an end terminal, supporting multi-hop U2N relay;
the first communication device, as a relay terminal, supporting multi-hop U2U relay;
the first communication device, as a relay terminal, supporting multi-hop U2N relay;
a maximum number of hops for multi-hop U2U relay supported by the first communication device; or
a maximum number of hops for multi-hop U2N relay supported by the first communication device.

In one implementation, information used for performing the multi-hop relay authentication includes subscription information, and the subscription information includes a subscribed relay role and/or relay capability for the first communication device.

In one implementation, the subscribed relay role and/or relay capability for the first communication device includes at least one of the following:
the first communication device being subscribed as an end terminal in multi-hop U2U relay;
the first communication device being subscribed as an end terminal in multi-hop U2N relay;
the first communication device being subscribed as a relay terminal in multi-hop U2U relay;
the first communication device being subscribed as a relay terminal in multi-hop U2N relay;
a maximum number of hops for multi-hop U2U relay subscribed by the first communication device; or
a maximum number of hops for multi-hop U2N relay subscribed by the first communication device.

In one implementation, the method further includes operation S1630.

At S1630, in a case of successful authentication, the second communication device sends authentication result information to a third communication device. The second communication device and the third communication device may be network devices. For example, the second communication device may be an AMF and the third communication device may be a Next Generation Radio Access Network (NG-RAN). For another example, the second communication device may be a source gNB (S-gNB), and the third communication device may be a target gNB (T-gNB).

In one implementation, the authentication result information includes at least one of the following:
whether the first communication device supports multi-hop U2U/U2N relay as an end terminal;
a maximum number of hops/supportable number of hops for multi-hop U2U/U2N relay supported by the first communication device as an end terminal;
whether the first communication device supports multi-hop U2U/U2N relay as a relay terminal; or
a maximum number of hops/supportable number of hops for multi-hop U2U/U2N relay supported by the first communication device as a relay terminal.

In one implementation, the authentication result information is carried in an Xn message from the source network device to the target network device in the case of a handover.

In one implementation, the Xn message further includes a hop number and/or a split-QoS configuration of the first communication device with respect to the source network device.

FIG. 17 is a schematic flowchart of a relay communication method 1700 according to another embodiment of the present application. The method may include one or more features of the methods 1500, 1600 described above. In one implementation, the multi-hop relay related information includes a multi-hop relay service request.

In one implementation, the second communication device receives multi-hop relay related information at S1510 includes operation S1710. At S1710, the second communication device receives a multi-hop relay service request.

In one implementation, the method further includes that the second communication device performs a multi-hop relay service based on the multi-hop relay service request.

In one implementation, the multi-hop relay service request is carried through at least one of the following: a first message in a random access procedure; an RRC setup message; an RRC resume message; an RRC re-establishment message; sidelink terminal information; terminal assistance information; or a measurement report message.

In one implementation, the multi-hop relay service request includes at least one of the following:
a cause value of connection setup, for indicating connection is set up for performing multi-hop relay service; a multi-hop relay request indication; layer 2 identification of one or more terminals on a multi-hop relay path; a total number of hops on a multi-hop relay path; a number of hops associated with one or more terminals on a multi-hop relay path; a service(s) of an end terminal; a service priority(s) for an end terminal; a service type(s) for an end terminal; QoS configuration for an end terminal; or signal quality of one or more hops on a multi-hop relay path.

In one implementation, the second communication terminal performing the multi-hop relay service based on the multi-hop relay service request includes operation S1720.

At S1720, the second communication device sends first reply information for the multi-hop relay service request.

In one implementation, the first reply information is used for at least one of: indicating successful authorization; indicating transmission of multi-hop relay service; indicating authorization failure; indicating disconnection of multi-hop relay service connection; or configuration information for multi-hop relay service transmission.

In one implementation, the first reply message is carried by at least one of: a second message in a random access procedure; a response message for an RRC setup message; a response message for an RRC resume message; a response message for an RRC re-establishment message; or an RRC reconfiguration message.

In one implementation, the method further includes operation S1730.

At S1730, the second communication device receives an access request that is initiated by the first communication device based on the first reply information. For example, if the first reply information indicates successful authorization of the multi-hop relay or transmission of the multi-hop relay service, the first communication device may initiate an access request based on the first reply information. After receiving the access request, the second communication device may set up a connection with the first communication device.

In one implementation, the operation S1720 where the second communication device sends first reply information for the multi-hop relay service request includes that:
the second communication device performs at least one of the following on a terminal in a first state:
in a first case, indicating successful authorization and/or transmission of a multi-hop relay service to one or more terminals in the first state on a multi-hop relay link; or
in a second case, indicating authorization failure and/or disconnection of multi-hop relay service connection to one or more terminals in the first state on a multi-hop relay link.

Herein, the terminal in the first state includes at least one of a terminal that has established a PC5 unicast connection, a terminal that has completed a discovery procedure, and a terminal that has completed a PC5-S procedure.

The first case includes at least one of the following: network authorization, a network providing a multi-hop configuration, or a network accepting the multi-hop relay service request;
The second case includes at least one of the following: no network authorization, a network not providing a multi-hop configuration, or a network not accepting the multi-hop relay service request.

For example, for a terminal that has established the PC5 unicast connection, a terminal that has completed the discovery procedure, or a terminal that has completed the PC5-S procedure, where there is network authorization, a network provides multi-hop configuration, and the network accepts the multi-hop relay service request, first reply information indicating successful authorization and/or transmission of multi-hop relay service is sent to one or more terminals in the first state on the multi-hop relay link.

For another example, for a terminal that has established a PC5 unicast connection, a terminal that has completed a discovery procedure, or a terminal that has completed a PC5-S procedure, when there is no network authorization, the network does not provide a multi-hop configuration, and the network does not accept the multi-hop relay service request, the first reply information indicating that authorization failure and/or disconnection of the multi-hop relay service connection is sent to one or more terminals in the first state on the multi-hop relay link.

In one implementation, the second communication device sends first reply information for the multi-hop relay service request at S1720 includes that:
the second communication device performs at least one of the following on a terminal in a second state:
in a first case, sending to one or more terminals in the second state on a multi-hop relay link a reply message that may include at least one of a discovery response, a Direct Communication Accept (DCA), or a report prior to DCR transmission; or
in the second case, not sending a reply message.

Herein, the terminal in the second state includes at least one of a terminal that has not established a PC5 unicast connection, a terminal that has not completed a discovery procedure, or a terminal that has not completed a PC5-S procedure.

The first case includes at least one of the following: network authorization, a network providing a multi-hop configuration, or a network accepting the multi-hop relay service request.

The second case includes at least one of the following: no network authorization, a network not providing a multi-hop configuration, or a network not accepting the multi-hop relay service request.

For example, for a terminal that has not established a PC5 unicast connection, a terminal that has not completed a discovery procedure, or a terminal that has not completed a PC5-S procedure, when there is network authorization, a network provides a multi-hop configuration, and a network accepts the multi-hop relay service request, the first reply information sent by the second communication device to one or more terminals in the second state on the multi-hop relay link may include a discovery response, a DCA, or a report prior to DCR transmission.

For another example, for a terminal that has not established the PC5 unicast connection, a terminal that has not completed the discovery procedure, or a terminal that has not completed the PC5-S procedure, when there is no network authorization, the network does not provide a multi-hop configuration, and the network does not accept the multi-hop relay service request, the second communication device does not send the first reply information.

In one implementation, the multi-hop relay related information includes a multi-hop relay report.

In one implementation, the multi-hop relay report is carried by at least one of: an RRC message, or a measurement report message.

In one implementation, the multi-hop relay report carries at least one of the following:
Layer 2 identification of one or more relays on a multi-hop relay path;
QoS configuration for an end terminal;
split-QoS configuration of a current hop; or
signal quality of one or more hops on a multi-hop relay path.

For specific examples of the second communication device performing methods 1500, 1600, and 1700 of the present embodiment, reference may be made to the related description of the second communication device in the above-described methods 1300, 1400, and it will not be repeatedly described here for the sake of brevity.

The relay communication method in the embodiments of the present application may be used for network control enhancement in the sidelink multi-hop relay technology, and may provide a network control mechanism for multi-hop relay on the basis of the existing single-hop relay. The following are specific examples of several network control mechanisms.

### Example 1: Network Capability Indication

**First. The network indicates whether it supports multi-hop relay.**
1. The indication may be a cell specific message as indicated in an SIB message, and/or an RRC message (UE specific) message. If both are supported at the same time, the UE specific message has higher priority.
2. The indication may indicate whether multi-hop relay is supported, such as enabling/disabling of layer 2 (L2) multi-hop (MH) U2N, L3 MH U2N, L2 MH U2U, L3 MH U2U.
3. The indication may also indicate a maximum hop number N specifically supported and/or a signal quality requirement corresponding to the hop numbers, for example, a Uu RSRP condition, a Uu RSRP threshold, an SL RSRP condition, an SL RSRP threshold, and the like. An example of the correspondence between hop numbers and signal quality requirements is as follows.

For example, the first hop in U2N relay (Hop_1(hop_n-1) in U2N relay): Uu RSRP > lowest threshold 1, and/or Uu RSRP < highest threshold 2.

For another example, the m-th hop in U2U relay and U2N relay (Hop_m(m>=1/m<n-1) in U2U relay and U2N relay): SL RSRP > lowest threshold 3.

4. The indication may also indicate the maximum hop number N specifically supported for different services/service priorities. For example, the maximum hop numbers corresponding to the services may be indicated in the following list:

### Service 1: 4; Service 2: 3.

### Example 2: UE performs relay procedure (e.g., discovery procedure) according to network capability indication

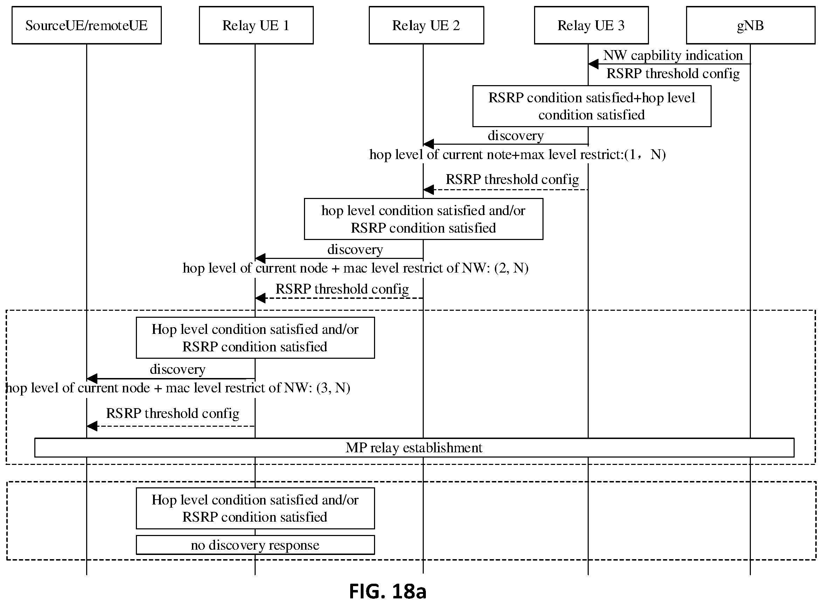

### First. Model-A, see FIG. 18a

1. A relay node (relay UE 3) closest to a network/within coverage of the network receives network (NW) capability indication information (including information content as previously described) and/or RSRP threshold configuration (RSRP threshold config) transmitted by the network.
2. If the relay UE (relay UE 3) determines that network RSRP criteria (condition) are satisfied and the hop number requirement is satisfied (and the upper layer triggers transmission of a discovery message), it may broadcast a discovery message (model A) and indicate in the discovery message the current hop numbers from the network (e.g., hop level of current note) and the maximum hop numbers restricted by the network (max level restriction). An example of one network RSRP condition includes: air interface signal (Uu signal) RSRP > threshold 1 (or plus or minus offset) and/or Uu signal RSRP < threshold 2 (or plus or minus offset).
   And/or, the relay UE may also send to other UEs a network RSRP threshold config, such as an RSRP threshold restriction parameter, which may be transmitted through discovery information, unicast (PC5-RRC) information, PC5-S information, broadcast-transmitted (forwarded) network configuration (system message) information, etc.
3. After receiving the discovery message, if the upper layer triggers the transmission of the discovery message and the relay UE determines that the hop number requirement and/or the RSRP criterion (e.g., Uu signal RSRP and/or PC5 signal RSRP) is satisfied, then another UE (UE not within network coverage, such as relay UE1 or relay UE2 (relay UE1/2)) may broadcast the discovery message (model A).
   (1) The hop number/RSRP criterion requirement may be a network configuration received from the relay UE 3, pre-configuration of the UE, or restrictions derived according to certain rules, such as according to service mapping (upper layer configuration);
   (2) The current number of hops from the network and the maximum number of hops restricted by the network may be indicated in the discovery message; and/or it may send to other UEs network RSRP threshold restriction parameters, which may be transmitted through discovery information, or unicast (PC5-RRC) information, or PC5-S information, or broadcast-transmitted (-forwarded) network configuration (system message) information, etc.
4. The final-hop node (an end UE, such as a remote UE, a source UE, or a relay node reaching the maximum hop number restriction) is handled as follows:
   (1) If the remote node is reached within the maximum hop number restriction, the remote UE determines that the RSRP criterion (derived from relay, pre-configuration or certain rules) is satisfied, and further selects to access the network through the MH path;
   (2) If the maximum hop number restriction has been reached, the relay UE does not further send a discovery message.

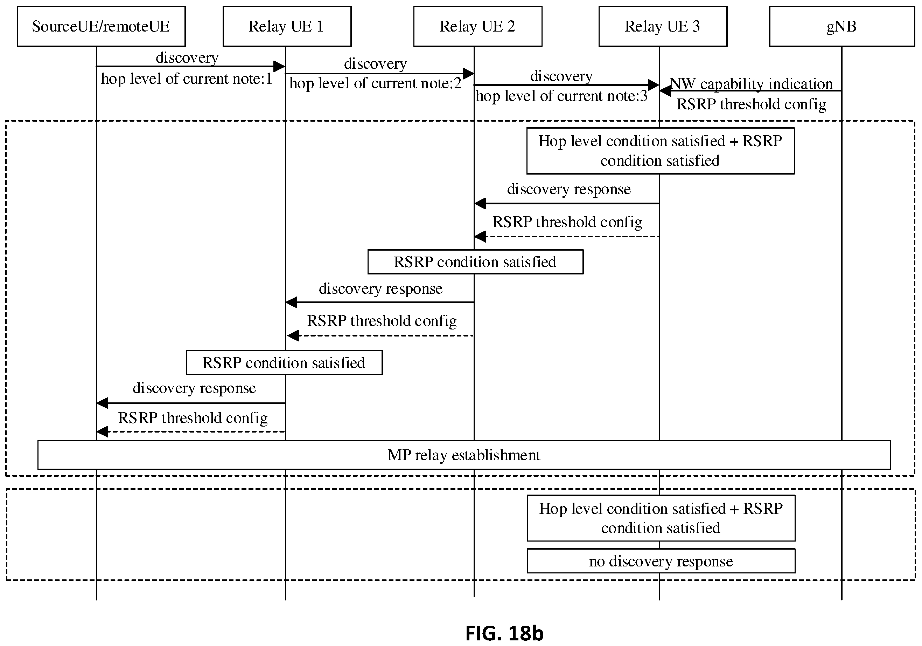

### Second, Model B/DCR based, see FIG. 18b.

1. A remote UE is triggered by the upper layer to send a discovery message (Model B) and indicates the current number of hops (hop level or hop number) and/or hop number restriction in the discovery message. Here, the current number of hops may be referred to as a hop level of current note, and it may be, for example, a number of hops between a discovered node and the remote UE. In this example, the hop level of current note between the relay UE 1 and the remote UE discovered by the remote UE is 1.
2. After receiving the discovery message, another UE (UE not within network coverage, such as relay UE1/2) transmits the discovery message (model B) if the relay UE determines that the hop number requirement (and the upper layer triggers the transmission of discovery) and/or the RSRP criterion (Uu signal RSRP and/or PC5 signal RSRP) is satisfied.
   (1) The hop number/RSRP criterion requirement may be a restriction preconfigured or derived according to certain rules, such as according to a service mapping (upper layer configuration); or may be a hop number restriction indicated from the remote UE, or a network configuration received from the relay UE 3;
   (2) The current number of hops from the network and the maximum number of hops restricted by the remote terminal are indicated in the discovery message.
3. A relay node (e.g., relay UE3) closest to a network/within coverage of the network receives network capability indication information (as described above: NW capability indication and/or RSRP threshold configuration) transmitted by the network and discovery information transmitted by other relay UEs.
   (1) The relay UE determines that the network RSRP criterion (Uu signal RSRP > threshold 1 (or plus/minus offset) and/or Uu signal RSRP < threshold 2 (or plus/minus offset)) and the hop number requirement (the hop number requirement for the network and/or the hop number requirement for the remote terminal) are satisfied (and the upper layer triggers the transmission of discovery), then it replies to the discovery message.
   (2) The relay UE does not reply to the received discovery message if it determines that the hop number restriction for the network is exceeded.

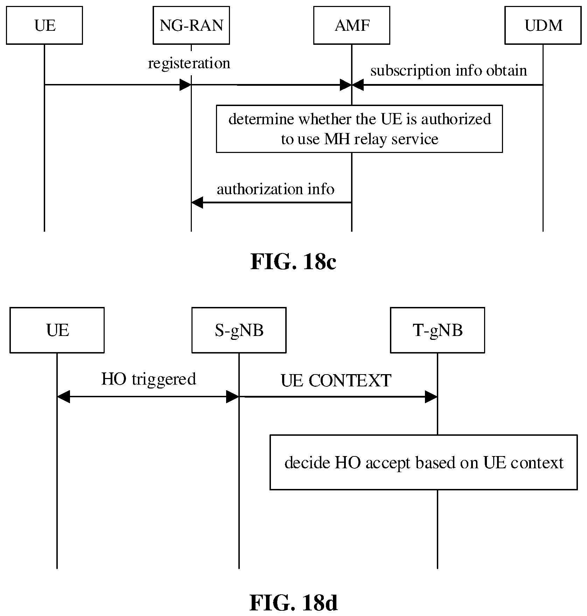

### Example 3: Network authentication, see FIG. 18c.

1. UE sends registration request information to a network (AMF), where the registration request information includes at least one of the following:
   the UE, as a (L2/3) remote UE, supporting multi-hop U2U/U2N relay;
   the UE, as a (L2/3) relay UE, supporting multi-hop U2U/U2N relay; or
   a maximum number of hops for a (L2/3) multi-hop U2U/U2N relay supported by the UE.
2. the AMF may obtain subscription information (subscription info obtain) of the UE from UDM. The subscription information may be contract information or registration information, and specifically includes at least one of the following:
   the UE is registered (or subscribed) as a remote UE in multi-hop (L2/3) U2U/U2N relay;
   the UE is registered (or subscribed) as a remote UE in multi-hop (L2/3) U2U/U2N relay;or
   a maximum number of hops/supportable number of hops for a multi-hop U2U/U2N relay for which the UE is registered (or subscribed).
3. The AMF determines whether authentication of multi-hop (MH) relay service for the UE is successful according to the UE registration request information and the subscription information. For example, it determines whether the UE is authorized to use MH relay service, If so, the authentication is successful, and then the AMF sends authentication result information (such as authorization information) to NG-RAN. The authentication result information includes at least one of the following:
   whether the UE supports a multi-hop U2U/U2N relay as a (L2/3) remote UE;
   a maximum number of hops/supportable number of hops for multi-hop U2U/U2N relay supported by the UE as a (L2/3) remote UE;
   whether the UE supports multi-hop U2U/U2N relay as a (L2/3) relay UE; or
   a maximum number of hops/supportable number of hops for multi-hop U2U/U2N relay supported by the UE as a (L2/3) relay UE.
   Referring to FIG. 18d, if handover (HO) occurs, multi-hop related information is carried in the Xn message by a source gNB (S-gNB) and sent to a target gNB (T-gNB).
4. The relevant information carried in the Xn message may include at least one of the following:
   the authentication result information (e.g. authorization info) sent by the AMF to the NG-RAN;
   number of hops for the source gNB; or
   split-QoS configuration.

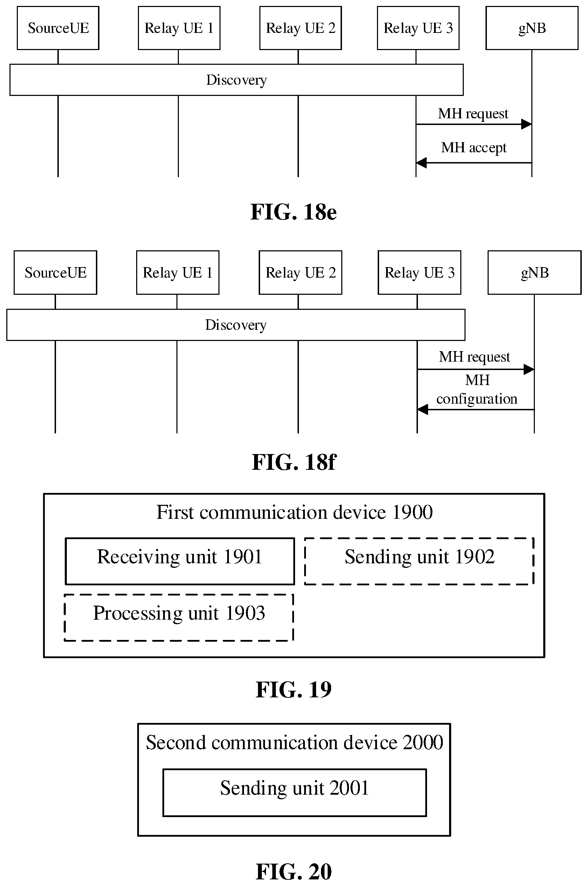

### Example 4: Network determines whether to allow access of multi-hop relays based on the number of hops, see FIG. 18e.

1. UE sends a multi-hop (MH) relay service request to the network. The UE may be the one (e.g., relay UE3) closest to the network, a remote UE, and/or any relay UE. Being closest to the network can be understood as having the fewest number of hops with the network.
2. The MH relay service request (which may be abbreviated as MH request) may have corresponding reply modes as follows:
   2-1. If the UE sending the service request has established a PC5 unicast connection, completed the discovery procedure and/or completed the PC5-S procedure;
      (1) If the network authorizes/provides MH configuration/accepts the MH request, it indicates successful authorization to other UEs on the MH link (or only to the remote UE) and/or directly performs transmission of the MH relay service;
      (2) If the network does not authorize/does not provide MH configuration/does not accept the MH request, it indicates authorization failure to other UEs (or only to the remote UE) on the MH link and/or disconnect the MH relay connection.
   2-2. If the UE sending the service request does not establish a PC5 unicast connection, it reports before replying with a discovery response, DCA, or sending DCR:
      (1) If the network authorizes/provides MH configuration/accepts the MH request, it replies with a discovery response, DCA or a report prior to DCR transmission;
      (2) If the network does not authorize/does not provide MH configuration /does not accept the MH request, it replies with a discovery response, DCA or a report prior to DCR transmission.
   2-3. The signaling related to the above service request may be carried in at least one of the following:
      (1) Random Access Channel (RACH): MSG1, where the network replies with reject or accept in MSG2;
      (2) In RRC setup, RRC resume, or RRC re-establishment messages, the network indicates accept or reject in the corresponding RRC response information.
      (3) In Sidelink UE Information (SUI), UE Assistance Information (UAI), measurement report messages (for connected UE), the network carries accept or reject information in the RRC conversion configuration file (Reconfig), such as relevant MH relay configuration information, or directly indicates accept or reject.
   2-4. The signaling of the service request may carry at least one of the following:
      (1) If the request message is RRC setup/resume/re-establishment, a cause value of connection setup may be carried to indicate that the connection is established for MH relay service;
      (2) MH request indication;
      (3) L2 IDs (ordered by hop numbers) of all UEs on the MH path or L2 IDs of adjacent UEs;
      (4) the number of hops experienced by the MH or the hop number where the UE is located;
      (5) Service/service priority/service type/QoS configuration for the remote UE;
      (6) Signal quality on each hop of the MH relay or signal quality of the current hop.

### Example 5: UE reports multi-hop relay information, see FIG. 18f.

### First. The UE reports a multi-hop relay related information report

1. The UE is in a connected state, and may be at least one of: UE (e.g., UE 3 in the figure) closest to a network, a remote UE, or any relay UE.
   (1) The remote UE indication may be at least one of: multi-hop remote UE (MH remote UE), an L2/L3 indication, a hop number indication, or a hop-number;
   (2) The relay UE indication may be at least one of: a multi-hop relay UE (MH relay UE), an L2/L3 indication, a hop number indication, or a hop-number.
2. The reporting is carried in RRC signaling, such as SUI, UAI, or measurement report messages.
3. The reporting signaling may carry (in addition to the UE-related indication above):
   (1) at least one of L2 IDs (ordered by hop number) of all UEs on the MH path, L2 IDs of adjacent UEs, L2 IDs of parent UEs, and L2 IDs of remote UEs;
   (2) QoS configuration of the remote UE;
   (3) split QoS configuration of the located hop;
   (4) signal quality on each hop of the MH relay or signal quality RSRP measurement for the current hop.

### Second, The network provides MH relay related configuration for the UE according to the report

1. The configuration may include at least one of the following:
   (1) Split-QoS configuration per hop;
   (2) Bearer to RLC channel mapping configuration;
   (3) UE ID Configuration;
   (4) resource allocation; or
   (5) Handover (HO) configuration, where the network adds or decreases relay UEs according to the configuration such as signal quality.

FIG. 19 is a schematic block diagram of a first communication device 1900 according to an embodiment of the present application. The first communication device 1900 may include a receiving unit 1901.

The receiving unit 1901 is configured to receive first indication information for indicating multi-hop relay capability information of a second communication device.

In one implementation, the multi-hop relay capability information includes at least one of the following:
whether multi-hop relay is supported; hop number requirement; signal quality requirement; or correspondence between hop numbers and signal quality requirements.

In one implementation, the hop number requirement includes at least one of the following: a maximum number of hops supported; a maximum number of hoops supported for different services; or a maximum number of hops supported for different service priorities.

In one implementation, the signal quality requirement includes at least one of the following: Uu RSRP condition; Uu RSRP threshold; SL RSRP condition; SL RSRP threshold; Uu RSRQ condition; Uu RSRQ threshold; SL RSRQ condition; or SL RSRQ threshold.

In one implementation, the first indication information is carried by at least one of: a broadcast message, or an RRC message.

In one implementation, the receiving unit 1901 is further configured to receive second indication information for indicating a number of hops between a first direct-connected terminal and the second communication device. A direct communication link exists between the first direct-connected terminal and the first communication device, and the first direct-connected terminal is capable of accessing the second communication device via a direct or non-direct communication link.

In one implementation, as shown in FIG. 19, the apparatus further includes a sending unit 1902.

The sending unit 1902 is configured to send the first indication information and/or third indication information in a case where the first communication device satisfies the hop number requirement and/or the signal quality requirement. The third indication information is used for indicating an associated hop number of the first communication device, and the associated hop number of the first communication device includes at least one of: a number of hops between the first communication device and the second communication device, or a maximum number of hops supported by the second communication device.

In one implementation, the second indication information or the third indication information is carried by at least one of: a discovery message, a PC5-RRC message, a PC5-S message, a broadcast-transmitted network configuration message, or a broadcast-forwarded network configuration message.

In one implementation, the sending unit 1902 is further configured to send fourth indication information for indicating a number of hops between the first communication device and an end terminal.

In one implementation, the receiving unit 1901 is further configured to receive first reply information for the fourth indication information.

In one implementation, the sending unit 1902 is further configured to send second reply information to a second direct-connected terminal based on the first reply message. A direct communication link exists between the second direct-connected terminal and the first communication device, and the first communication device is capable of accessing the end terminal through a direct or non-direct communication link. The second reply information is used to inform the second direct-connected terminal whether the first communication device or the second direct-connected terminal satisfies the hop number requirement and/or the signal quality requirement.

In one implementation, the apparatus further includes a processing unit 1903.

The processing unit 1903 is configured for the first communication device to access the second communication device based on the first reply information. The first communication device may be an end terminal.

In one implementation, the receiving unit 1901 is further configured to receive fifth indication information from a second direct-connected terminal, the fifth indication information being configured to indicate the number of hops between the second direct-connected terminal and an end terminal. A direct communication link exists between second direct-connected terminal and the first communication device, and the second direct-connected terminal is capable of accessing the end terminal via a direct or non-direct communication link.

In one implementation, the processing unit 1903 is further configured to determine whether a number of hops between the first communication device and/or the second direct-connected terminal and the end terminal satisfies the hop number requirement, and/or whether a link quality corresponding to the number of hops between the first communication device and/or the second direct-connected terminal and the end terminal satisfies the signal quality requirement.

In one implementation, the processing unit 1903 is further configured to send third reply information to the second direct-connected terminal for the fifth indication information in a case where the first communication device is within coverage of a network device and satisfies the hop number requirement and/or the signal quality requirement. The third reply information is used to inform the second direct-connected terminal whether the first communication device or the second direct-connected terminal satisfies the hop number requirement and/or the signal quality requirement.

In one implementation, the sending unit 1902 is further configured to send sixth indication information for indicating a number of hops between the first communication device and an end terminal to the first direct connection terminal in a case where the first communication device is not within coverage of a network device and satisfies the hop number requirement and/or the signal quality requirement. A direct connection communication link exists between the first direct-connected terminal the first communication device, and the first communication device is capable of accessing the end terminal through a direct or non-direct communication link.

In one implementation, the fifth indication information or the sixth indication information is further used to indicate multi-hop relay capability information of the second communication device.

In one implementation, the fifth indication information or the sixth indication information is carried by a discovery message, or a direct communication request (DCR) message.

In one implementation, the first communication device is a relay terminal and the second communication device is a network device.

In one implementation, the first communication device is an end terminal and the second communication device is a network device.

In one implementation, the end terminal is outside coverage of the network device, and there are one or more relay terminals between the end terminal and the network device.

In one implementation, the processing unit 1903 is further configured to select to access the second communication device through a multi-hop relay path that needs to go through one or more relay terminals to the second communication device, in a case where the first communication device, such as the end terminal, satisfies the hop number requirement and/or the signal quality requirement.

The first communication device 1900 according to the embodiment of the present application can implement the corresponding functions of the first communication device in the above-described method embodiments. The flows, functions, implementations, and beneficial effects corresponding to various modules (sub-modules, units, components, etc.) in the first communication device 1900 may be described in the corresponding description in the above-described method embodiments and will not be described in detail here. It is to be noted that functions described with respect to various modules (sub-modules, units, components, etc.) in the first communication device 1900 of the embodiment of the present application may be implemented by different modules (sub-modules, units, components, etc.), or may be implemented by the same module (sub-module, unit, component, etc.).

FIG. 20 is a schematic block diagram of a second communication device 2000 according to an embodiment of the present application. The second communication device 2000 may include a sending unit 2001.

The sending unit 2001 is configured to send first indication information for indicating multi-hop relay capability information of the second communication device.

In one implementation, the multi-hop relay capability information includes at least one of the following:
whether multi-hop relay is supported; hop number requirement; signal quality requirement; or correspondence between hop numbers and signal quality requirements.

In one implementation, the hop number requirement includes at least one of the following: a maximum number of hops supported; a maximum number of hops supported for different services; or a maximum number of hops supported for different service priorities.

In one implementation, the signal quality requirement comprises at least one of: a Uu RSRP condition; Uu RSRP Threshold; SL RSRP Conditions; SL RSRP Threshold; Uu RSRQ Conditions; Uu RSRQ Threshold; SL RSRQ Conditions; SL RSRQ Threshold.

In one implementation, the first indication information is carried by at least one of a broadcast message, or an RRC message.

In one implementation, the first communication device is a relay terminal and the second communication device is a network device.

In one implementation, the first communication device is an end terminal and the second communication device is a network device.

In one implementation, the end terminal is outside coverage of the network device, and there are one or more relay terminals between the end terminal and the network device.

The second communication device 2000 according to the embodiment of the present application can implement the corresponding functions of the second communication device in the above-described method embodiment. The flows, functions, implementations, and beneficial effects corresponding to various modules (sub-modules, units, components, etc.) in the second communication device 2000 may be described in the corresponding description in the above-described method embodiment, and will not be repeatedly described here. The functions described with respect to various modules (sub-modules, units, components, etc.) in the second communication device 2000 of the embodiment of the present application may be implemented by different modules (sub-modules, units, components, etc.), or may be implemented by the same module (sub-module, unit, component, etc.).

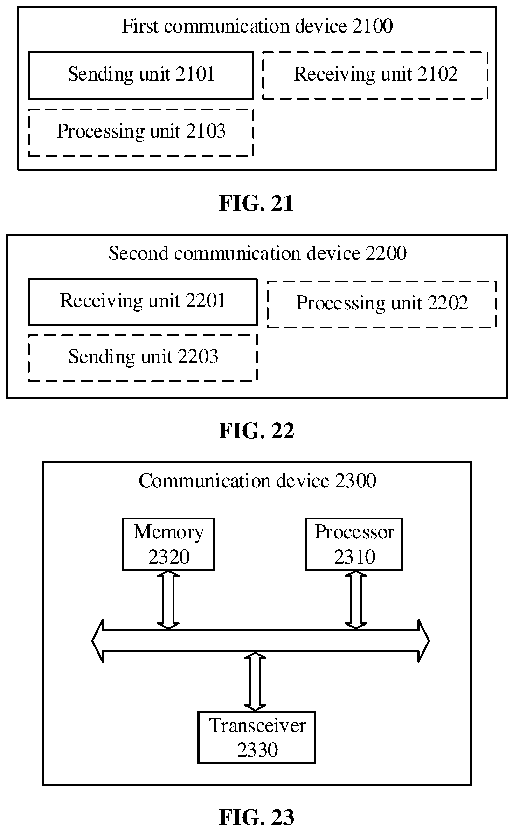

FIG. 21 is a schematic block diagram of a first communication device 2100 according to an embodiment of the present application. The first communication device 2100 may include a sending unit 2101.

The sending unit 2101 is configured to send multi-hop relay-related information for requesting a second communication device to perform a multi-hop relay-related operation.

In one implementation, the multi-hop relay related information includes registration request information for indicating the second communication device to perform multi-hop relay authentication of the first communication device based on the registration request information.

In one implementation, the registration request information includes a to-be-authenticated relay role and/or relay capability of the first communication device.

In one implementation, the to-be-authenticated relay role and/or relay capability of the first communication device includes at least one of the following:
the first communication device, as an end terminal, supports multi-hop U2U relay;
the first communication device, as an end terminal, supports multi-hop U2N relay;
the first communication device, as a relay terminal, supports multi-hop U2U relay;
the first communication device, as a relay terminal, supports multi-hop U2N relay; or
a maximum number of hops for multi-hop U2U relay supported by the first communication device; or
a maximum number of hops for multi-hop U2N relay supported by the first communication device supports.

In one implementation, information used for the multi-hop relay authentication includes subscription information that includes a subscribed relay role and/or relay capability for the first communication device.

In one implementation, the subscribed relay role and/or relay capability for the first communication device includes at least one of the following:
the first communication device being subscribed as an end terminal in multi-hop U2U relay;
the first communication device being subscribed as an end terminal in multi-hop U2N relay;
the first communication device being subscribed as a relay terminal in multi-hop U2U relay;
the first communication device being subscribed as a relay terminal in multi-hop U2N relay;
a maximum number of hop hops of multi-hop U2U relay subscribed by the first communication device; or
a maximum number of hops for multi-hop U2N relay subscribed by the first communication device.

In one implementation, the multi-hop relay related information includes a multi-hop relay service request for requesting multi-hop relay service.

In one implementation, the multi-hop relay service request is carried by at least one of: a first message in a random access procedure; an RRC setup message; an RRC resume message; an RRC re-establishment message; a sidelink terminal information; terminal assistance information; or a measurement report message.

In one implementation, the multi-hop relay service request includes at least one of the following:
a cause value of connection setup for indicating connection is set up for performing multi-hop relay service;
multi-hop relay request indication; layer 2 identification of one or more terminals on a multi-hop relay path; a total number of hop experienced by a multi-hop relay path; an associated number of hops of one or more terminals on a multi-hop relay path; service of an end terminal; service priority for an end terminal; a service type for an terminal; QoS configuration for an end terminal; or signal quality of one or more hops on a multi-hop relay path.

In one implementation, the apparatus further includes a receiving unit 2102.

The receiving unit 2102 is configured to receive first reply information for the multi-hop relay service request.

In one implementation, the first reply information is used for at least one of: indicating successful authorization; indicating transmission of multi-hop relay service; indicating authorization failure; indicating disconnection of multi-hop relay service connection; or configuration information for multi-hop relay service transmission.

In one implementation, the first reply message is carried by at least one of: a second message in a random access procedure; a response message for an RRC setup message; a response message for an RRC resume message; a response message for an RRC re-establishment message; or an RRC reconfiguration message.

In one implementation, the apparatus further includes a processing unit 2103.

The processing unit 2103 is configured to access the second communication device or send a second reply information based on the first reply information.

In one implementation, the second reply information is for at least one of the following:
transmission of multi-hop relay service data; disconnection of multi-hop relay service connection; establishment of multi-hop relay service connection; or configuration information for multi-hop relay service transmission.

In one implementation, the second reply information is carried by at least one of: a discovery message, a PC5-RRC message, or a PC5-S message.

In one implementation, the multi-hop relay related information comprises a multi-hop relay report.

In one implementation, the multi-hop relay report is carried by at least one of: an RRC message, or a measurement report message.

In one implementation, the multi-hop relay report carries at least one of the following:
Layer 2 identification of one or more relays on a multi-hop relay path; QoS configuration for an end terminal; split-QoS configuration of a current hop;or signal quality of one or more hops on a multi-hop relay path.

The first communication device 2100 according to the embodiment of the present application can implement the corresponding functions of the first communication device in the above-described method embodiment. The flows, functions, implementations, and beneficial effects corresponding to various modules (sub-modules, units, components, etc.) in the first communication device 2100 may be described in the corresponding description in the above-described method embodiment, and will not be repeatedly described here. It is to be noted that functions described with respect to various modules (sub-modules, units, components, etc.) in the first communication device 2100 of the embodiment of the present application may be implemented by different modules (sub-modules, units, components, etc.) or by the same module (sub-module, unit, component, etc.).

FIG. 22 is a schematic block diagram of a second communication device 2200 according to an embodiment of the present application. The second communication device 2200 includes a receiving unit 2201.

The receiving unit 2201 is configured to receive multi-hop relay-related information for requesting the second communication device to perform a multi-hop relay-related operation.

In one implementation, the apparatus further includes a processing unit 2202.

The processing unit 2202 is configured to perform multi-hop relay authentication of the first communication device based on the registration request information.

In one implementation, the registration request information includes a relay role and/or a relay capability to be authenticated by the first communication device.

In one implementation, the relay role and/or relay capability to be authenticated by the first communication device comprises at least one of the following:
the first communication device, as an end terminal, supports multi-hop U2U relay;
the first communication device, as an end terminal, supports multi-hop U2N relay;
the first communication device, as a relay terminal, supports multi-hop U2U relay;
the first communication device, as a relay terminal, supports multi-hop U2N relay;
a maximum number of hops for multi-hop U2U relay supported by the first communication device; or
a maximum number of hops for multi-hop U2N relay supported by the first communication device.

In one implementation, information used for the multi-hop relay authentication includes subscription information that includes a subscribed relay role and/or relay capability for the first communication device.

In one implementation, the subscribed relay role and/or relay capability for the first communication device includes at least one of the following:
the first communication device being subscribed as an end terminal in multi-hop U2U relay;
the first communication device being subscribed as an end terminal in multi-hop U2N relay;
the first communication device being subscribed as a relay terminal in multi-hop U2U relay;
the first communication device being subscribed as a relay terminal in multi-hop U2N relay;
a maximum number of hops for multi-hop U2U relay subscribed by the first communication device; or
a maximum number of hops for multi-hop U2N relay subscribed by the first communication device.

In one implementation, the apparatus further includes a sending unit 2203.

The sending unit 2203 is configured to send authentication result information to a third communication device in a case of successful authentication.

In one implementation, the authentication result information includes at least one of the following:
whether the first communication device supports multi-hop U2U/U2N relay as an end terminal;
a maximum number of hops/supportable number of hops for multi-hop U2U/U2N relay supported by the first communication device as an end terminal;
whether the first communication device supports multi-hop U2U/U2N relay as a relay terminal; or
a maximum number of hops/supportable number of hops for multi-hop U2U/U2N relay supported by the first communication device as a relay terminal.

In one implementation, the authentication result information is carried in an Xn message from a source network device to a target network device in the case of handover.

In one implementation, the Xn message further includes a hop number and/or a split-QoS configuration of the first communication device with respect to the source network device.

In one implementation, the multi-hop relay related information includes a multi-hop relay service request, and the processing unit 2202 is further configured to perform a multi-hop relay service based on the multi-hop relay service request.

In one implementation, the multi-hop relay service request is carried by at least one of: a first message in a random access procedure; an RRC setup message; an RRC resume message; an RRC re-establishment message; sidelink terminal information; terminal assistance information; or a measurement report message.

In one implementation, the multi-hop relay service request includes at least one of the following:
a cause value of connection setup, for indicating connection is set up for multi-hop relay service; a multi-hop relay request indication; layer 2 identification of one or more terminals on a multi-hop relay path; a total number of hops on a multi-hop relay path; an associated number of hops of one or more terminals on a multi-hop relay path; a service of an end terminal; a service priority for an end terminal; a service type for an end terminal; QoS configuration for an end terminal; signal quality of one or more hops on a multi-hop relay path.

In one implementation, the sending unit 2203 is further configured to send first reply information for the multi-hop relay service request.

In one implementation, the first reply information is used for at least one of: indicating successful; indicating transmission of multi-hop relay service; indicating authorization failure; indicating disconnection of multi-hop relay service connection; or configuration information for multi-hop relay service transmission.

In one implementation, the first reply message is carried by at least one of: a second message in a random access procedure; a response message for an RRC setup message; a response message for an RRC resume message; a response message for an RRC re-establishment message; or an RRC reconfiguration message.

In one implementation, the receiving unit is further configured to receive an access request that is initiated by the first communication device based on the first reply information.

In one implementation, the sending unit is further configured for the second communication device to perform at least one of the following on a terminal in a first state:
in a first case, indicating successful authorization and/or transmission of multi-hop relay service to one or more terminals in the first state on a multi-hop relay link; or
in a second case, indicating authorization failure and/or disconnection of multi-hop relay service connection to one or more terminals of the first state on a multi-hop relay link.

Herein, the terminal in the first state includes at least one of: a terminal that has established a PC5 unicast connection, a terminal that has completed a discovery procedure, or a terminal that has completed a PC5-S procedure.

The first case includes at least one of the following: network authorization, a network providing a multi-hop configuration, or a network accepting the multi-hop relay service request.

The second case includes at least one of the following: no network authorization, a network not providing a multi-hop configuration, or a network not accepting the multi-hop relay service request.

When sending first reply information for the multi-hop relay service request, the sending unit is further configured for the second communication device to perform at least one of the following on a terminal in the second state:
in a first case, sending to one or more terminals in the second state on a multi-hop relay link a reply message that includes at least one of a discovery response, a DCA, or a report prior to DCR transmission; or
in a second case, not sending a reply message.

Herein, the terminal in the second state includes at least one of: a terminal that has not established a PC5 unicast connection, a terminal that has not completed a discovery procedure, or a terminal that has not completed a PC5-S procedure.

The first case includes at least one of the following: network authorization, a network providing multi-hop configuration, or a network accepting the multi-hop relay service request.

The second case includes at least one of the following: no network authorization, a network not providing multi-hop configuration, or a network not accepting the multi-hop relay service request.

Sending first reply information for the multi-hop relay service request, and the multi-hop relay related information includes a multi-hop relay report.

Sending first reply information for the multi-hop relay service request, and the multi-hop relay report is carried by at least one of: an RRC message, or a measurement report message.

Sending first reply information for the multi-hop relay service request, and the multi-hop relay report carries at least one of the following:

Layer 2 identification of one or more relays on a multi-hop relay path; QoS configuration for an end terminal; split-QoS configuration of a current hop; or signal quality of one or more hops on a multi-hop relay path.

The second communication device 2200 according to the embodiment of the present application can implement the corresponding function of the second communication device in the above-described method embodiment. The flows, function, implementations, and beneficial effects corresponding to various modules (sub-modules, units, components, etc.) in the second communication device 2200 may be described in the corresponding description in the above-described method embodiment, and will not be repeatedly described herein. It is to be noted that functions described with respect to various modules (sub-modules, units, components, etc.) in the second communication device 2200 of the embodiment of the present application may be implemented by different modules (sub-modules, units, components, etc.) or by the same module (sub-module, unit, component, etc.).

FIG. 23 is a schematic structural diagram of a communication device 2300 according to an embodiment of the present application. The communication device 2300 includes a processor 2310 that may invoke and execute a computer program from a memory to cause the communication device 2300 to implement the methods in the embodiments of the present application.

In one implementation, the communication device 2300 may further include a memory 2320. Herein, the processor 2310 may invoke and execute a computer program from the memory 2320 to cause the communication device 2300 to implement the methods in the embodiments of the present application.

Here, the memory 2320 may be a separate device independent of the processor 2310, or may be integrated in the processor 2310.

In one implementation, the communication device 2300 may further include a transceiver 2330, and the processor 2310 may control the transceiver 2330 to communicate with other devices, in particular, may transmit information or data to other devices, or receive information or data transmitted by other devices.

Here, the transceiver 2330 may include a transmitter and a receiver. The transceiver 2330 may further include antennas, and the number of antennas may be one or more.

In one implementation, the communication device 2300 may be the first communication device in the embodiment of the present application, and the communication device 2300 may implement corresponding processes implemented by the first communication device in each method of the embodiments of the present application, which will not be described herein for the sake of brevity.

In one implementation, the communication device 2300 may be the second communication device in the embodiments of the present application, and the communication device 2300 may implement corresponding processes implemented by the second communication device in each method of the embodiments of the present application, which will not be described herein for the sake of conciseness.

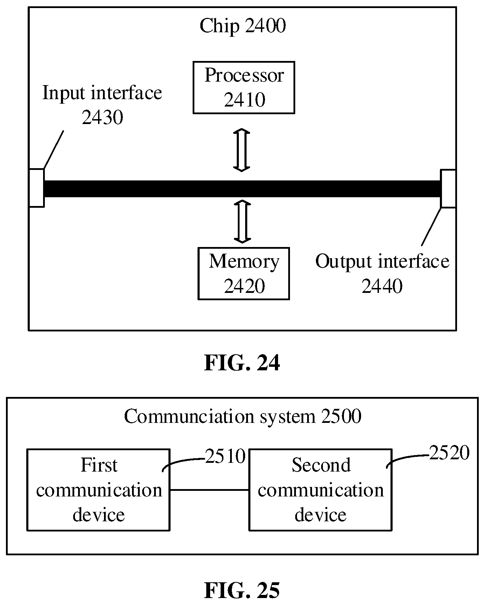

FIG. 24 is a schematic structural diagram of a chip 2400 according to an embodiment of the present application. The chip 2400 includes a processor 2410, which may invoke and execute a computer program from a memory to implement the methods in the embodiments of the present application.

In one implementation, the chip 2400 may further include a memory 2420. Here, the processor 2410 may invoke and execute a computer program from the memory 2420 to implement the methods performed by the first communication device or the second communication device in the embodiments of the present application.

The memory 2420 may be a separate device separate from the processor 2410 or may be integrated in the processor 2410.

In one implementation, the chip 2400 may further include an input interface 2430. The processor 2410 may control the input interface 2430 to communicate with other devices or chips, and specifically may acquire information or data transmitted by other devices or chips.

In one implementation, the chip 2400 may further include an output interface 2440. The processor 2410 may control the output interface 2440 to communicate with other devices or chips, and specifically may output information or data to other devices or chips.

In one implementation, the chip may be applied to the first communication device in the embodiments of the present application, and the chip may implement corresponding processes implemented by the first communication device in each method of the embodiments of the present application, which will not be repeated here for the sake of simplicity.

In one implementation, the chip may be applied to the second communication device in the embodiments of the present application, and the chip may implement corresponding processes implemented by the second communication device in each method of the embodiments of the present application, which will not be repeated here for the sake of simplicity.

The chips applied to the first communication device and the second communication device may be the same chip or different chips.

It should be understood that the chip mentioned in the embodiments of the present application may also be referred to as a system-level chip, a system chip, a chip system or a system-on-chip or the like.

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. The general-purpose processor mentioned above may be a microprocessor or any conventional processor or the like.

The memory mentioned above may be a volatile memory or a non-volatile memory, or may include both volatile and non-volatile memories. The non-volatile memory may be a read-only memory (ROM), a programmable read-only memory (PROM), an erasable PROM (EPROM), an electrically erasable programmable read-only memory (EEPROM), or a flash memory. The volatile memory may be a random access memory (RAM).

It should be understood that the memory described above is illustrative but not limiting. For example, the memory in the embodiments of the present application may also be a static random access memory (SRAM), a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present application is intended to include, but is not limited to, these and any other suitable types of memory.

FIG. 25 is a schematic block diagram of a communication system 2500 according to an embodiment of the present application. The communication system 2500 includes a first communication device 2510 and a second communication device 2520. In one implementation, the first communication device 2510 is configured to receive first indication information for indicating multi-hop relay capability information of the second communication device. The second communication device 2520 is configured to transmit the first indication information. In one embodiment, the first communication device 2510 is configured to transmit multi-hop relay related information for requesting the second communication device to perform a multi-hop relay related operation. The second communication device 2520 is configured to receive multi-hop relay related information. The first communication device 2510 may be used to implement the corresponding functions implemented by the first communication device in the above-described methods, and the second communication device 2520 may be used to implement the corresponding functions implemented by the second communication device in the above-described methods. For the sake of brevity, details will not be repeated here.

In the embodiments described above, the described functions may be implemented in whole or in part by software, hardware, firmware, or any combination thereof. When implemented in software, the solution may be implemented in whole or in part in the form of a computer program product. The computer program product includes one or more computer instructions. When the computer program instructions are loaded and executed on a computer, the processes or functions according to the embodiments of the present application are generated in whole or in part. The computer may be a general purpose computer, a special purpose computer, a computer network, or other programmable device. The computer instructions may be stored in a computer-readable storage medium or transmitted from one computer-readable storage medium to another. For example, the computer instructions may be transmitted from one website site, computer, server, or data center to another web site, computer, server, or data center in wired (e.g., coaxial cable, optical fiber, Digital Subscriber Line (DSL)) or wireless (e.g., infrared, wireless, microwave, etc.) manner. The computer-readable storage medium may be any usable medium that a computer may read or a data storage device containing one or more usable media integration, such as a server, data center, etc. The usable media may be magnetic media (e.g. floppy disk, hard disk, magnetic tape), optical media (e.g. digital video disc (DVD)), or semiconductor media (e.g. solid state disk (SSD)), etc.

It should be understood that in various embodiments of the present application, the sequence numbers of the above-described processes do not mean an order of execution, and the order of execution of each process should be determined by its function and internal logic, and should not constitute any limitation on the implementation of the embodiments of the present application.

Those skilled in the art will clearly understand that for convenience and conciseness of the description, the specific working processes of the systems, devices and units described above may refer to the corresponding processes in the aforementioned method embodiments, and will not be repeatedly described here.

The above is only the specific implementations of the present application, but the scope of protection of the present application is not limited thereto. Any person skilled in the art may easily think of changes or substitutions within the technical scope disclosed in the present application, which should be covered within the scope of protection of the present application. Therefore, the scope of protection of this application shall be subject to the scope of protection of the claims.

## Claims

1. A method for relay communication, comprising:
receiving, by a first communication device, first indication information, the first indication information being used to indicate multi-hop relay capability information of a second communication device.

2. The method of claim 1, wherein the multi-hop relay capability information comprises at least one of the following:
whether multi-hop relay is supported;
hop number requirement;
signal quality requirement; or
correspondence between hop numbers and signal quality requirements.

3. The method of claim 2, wherein the hop number requirement comprises at least one of the following:
a maximum number of hops supported; a maximum number of hops supported for different services; or a maximum number of hops supported for different service priorities.

4. The method of claim 2 or 3, wherein the signal quality requirement comprises at least one of the following:
an air interface (Uu) Reference Signal Received Power (RSRP) condition, a Uu RSRP threshold, a Sidelink (SL) RSRP condition, an SL RSRP threshold, a Uu Reference Signal Received Quality (RSRQ) condition, a Uu RSRQ threshold, an SL RSRQ condition, or an SL RSRQ threshold.

5. The method of any one of claims 2 to 4, further comprising:
receiving, by the first communication device, second indication information, the second indication information being used to indicate a number of hops between a first direct-connected terminal and the second communication device, wherein a direct communication link exists between the first direct-connected terminal and the first communication device, and the first direct-connected terminal is capable of accessing the second communication device via a direct or non-direct communication link.

6. The method of any one of claims 2 to 5, further comprising:
in a case where the first communication device satisfies the hop number requirement and/or the signal quality requirement, sending, by the first communication device, the first indication information and/or third indication information, the third indication information being used to indicate an associated number of hops of the first communication device, wherein the associated number of hops of the first communication device comprises at least one of the following: a number of hops between the first communication device and the second communication device, or a maximum number of hops supported by the second communication device.

7. The method of claim 6, wherein the third indication information is carried by at least one of the following: a discovery message, a PC5 Radio Resource Control (PC5-RRC) message, a PC5 Signaling (PC5-S) message, a broadcast-transmitted network configuration message, or a broadcast-forwarded network configuration message.

8. The method of any one of claims 1 to 7, wherein the first indication information is carried by at least one of the following: a broadcast message, or an RRC message.

9. The method of any one of claims 1 to 4, further comprising:
sending, by the first communication device, fourth indication information, the fourth indication information being used to indicate a number of hops between the first communication device and an end terminal.

10. The method of claim 9, further comprising:
receiving, by the first communication device, first reply information for the fourth indication information.

11. The method of claim 10, further comprising:
sending, by the first communication device, second reply information to a second direct-connected terminal based on the first reply message, wherein a direct communication link exists between the second direct-connected terminal and the first communication device, and the second direct-connected terminal is capable of accessing an end terminal via a direct or non-direct communication link, the second reply information being used to inform the second direct-connected terminal whether the first communication device or the second direct-connected terminal satisfies the hop number requirement and/or the signal quality requirement.

12. The method of claim 10, further comprising:
accessing, by the first communication device, the second communication device based on the first reply information, wherein the first communication device is an end terminal.

13. The method of any one of claims 2 to 4, further comprising:
receiving, by the first communication device, fifth indication information from a second direct-connected terminal, the fifth indication information being used to indicate a number of hops between the second direct-connected terminal and an end terminal, wherein a direct communication link exists between the second direct-connected terminal has and the first communication device, and the second direct-connected terminal is capable of accessing the remote terminal via a direct or non-direct communication link.

14. The method of claim 13, further comprising:
determining, by the first communication device, whether a number of hops between the first communication device and/or the second direct-connected terminal and the end terminal satisfies the hop number requirement, and/or whether a link quality corresponding to the number of hops between the first communication device and/or the second direct-connected terminal and the end terminal satisfies the signal quality requirement.

15. The method of claim 13 or 14, further comprising:
in a case where the first communication device is within coverage of a network device and satisfies the hop number requirement and/or the signal quality requirement, sending, by the first communication device, third reply information to the second direct-connected terminal in response to the fifth indication information, the third reply information being used to inform the second direct-connected terminal whether the first communication device or the second direct-connected terminal satisfies the hop number requirement and/or the signal quality requirement.

16. The method of claim 13 or 14, further comprising:
in a case where the first communication device is not within coverage of a network device and satisfies the hop number requirement and/or the signal quality requirement, sending, by the first communication device, sixth indication information to a first direct-connected terminal, the sixth indication information being used to indicate a number of hops between the first communication device and an end terminal, wherein a direct communication link exists between the first direct-connected terminal and the first communication device, and the first direct-connected terminal is capable of accessing the end terminal via a direct or non-direct communication link.

17. The method of claim 16, wherein the fifth indication information or the sixth indication information is further used to indicate the multi-hop relay capability information of the second communication device.

18. The method of claim 16 or 17, wherein the fifth indication information or the sixth indication information is carried by a discovery message or a Direct Communication Request (DCR) message.

19. The method of any one of claims 1 to 11 and 13 to 18, wherein the first communication device is a relay terminal, and the second communication device is a network device.

20. The method of any one of claims 1 to 6, 9, 10, and 12, wherein the first communication device is an end terminal, and the second communication device is a network device.

21. The method of claim 20, wherein the end terminal is outside coverage of the network device, and there are one or more relay terminals between the end terminal and the network device.

22. The method of claim 20 or 21, further comprising:
in a case where the first communication device satisfies the hop number requirement and/or the signal quality requirement, selecting, by the first communication device, to access the second communication device through a multi-hop relay path that needs to go through one or more relay terminals to the second communication device.

23. A method for relay communication, comprising:
sending, by a second communication device, first indication information, the first indication information being used to indicate multi-hop relay capability information of the second communication device.

24. The method of claim 23, wherein the multi-hop relay capability information comprises at least one of the following:
whether multi-hop relay is supported;
hop number requirement;
signal quality requirement; or
correspondence between hop numbers and signal quality requirements.

25. The method of claim 24, wherein the hop number requirement comprises at least one of the following:
a maximum number of hops supported; a maximum number of hops supported for different services; or a maximum number of hops supported for different service priorities.

26. The method of claim 24 or 25, wherein the signal quality requirement comprises at least one of the following:
an air interface (Uu) Reference Signal Received Power (RSRP) condition, a Uu RSRP threshold, a Sidelink (SL) RSRP condition, an SL RSRP threshold, a Uu Reference Signal Received Quality (RSRQ) condition, a Uu RSRQ threshold, an SL RSRQ condition, or an SL RSRQ threshold.

27. The method of any one of claims 23 to 26, wherein the first indication information is carried by at least one of the following: a broadcast message, or an RRC message.

28. The method of any one of claims 23 to 27, wherein a first communication device is a relay terminal, and the second communication device is a network device.

29. The method of any one of claims 23 to 27, wherein a first communication device is an end terminal, and the second communication device is a network device.

30. The method of claim 29, wherein the end terminal is outside coverage of the network device, and there are one or more relay terminals between the end terminal and the network device.

31. A method for relay communication, comprising:
sending, by a first communication device, multi-hop relay related information, the multi-hop relay related information being used to request a second communication device to perform a multi-hop relay related operation.

32. The method of claim 31, wherein the multi-hop relay related information comprises registration request information, the registration request information being used to indicate the second communication device to perform multi-hop relay authentication of the first communication device based on the registration request information.

33. The method of claim 32, wherein the registration request information comprises a to-be-authenticated relay role and/or relay capability of the first communication device.

34. The method of claim 33, wherein the to-be-authenticated relay role and/or relay capability of the first communication device comprises at least one of the following:
the first communication device, as an end terminal, supporting multi-hop UE-to-UE (U2U) relay;
the first communication device, as an end terminal, supporting multi-hop UE-to-Network (U2N) relay;
the first communication device, as a relay terminal, supporting multi-hop U2U relay;
the first communication device, as a relay terminal, supporting multi-hop U2N relay;
a maximum number of hops for multi-hop U2U relay supported by the first communication device; or
a maximum number of hops for multi-hop U2N relay supported by the first communication device.

35. The method of any one of claims 32 to 34, wherein information used for performing the multi-hop relay authentication comprises subscription information, the subscription information comprising a subscribed relay role and/or relay capability for the first communication device.

36. The method of claim 35, wherein the subscribed relay role and/or relay capability for the first communication device comprises at least one of the following:
the first communication device being subscribed as an end terminal in multi-hop U2U relay;
the first communication device being subscribed as an end terminal in multi-hop U2N relay;
the first communication device being subscribed as a relay terminal in multi-hop U2U relay;
the first communication device being subscribed as a relay terminal in multi-hop U2N relay;
a maximum number of hops for multi-hop U2U relay subscribed by the first communication device; or
a maximum number of hops for multi-hop U2N relay subscribed by the first communication device.

37. The method of claim 31, wherein the multi-hop relay related information comprises a multi-hop relay service request, the multi-hop relay service request being used to request a multi-hop relay service.

38. The method of claim 37, wherein the multi-hop relay service request is carried by at least one of the following:
a first message in a random access procedure;
a Radio Resource Control (RRC) setup message;
an RRC resume message;
an RRC re-establishment message;
sidelink terminal information;
terminal assistance information; or
a measurement report message.

39. The method of claim 37 or 38, wherein the multi-hop relay service request comprises at least one of the following:
a cause value of connection setup, for indicating that connection is set up for performing multi-hop relay service;
a multi-hop relay request indication;
Layer 2 identification of one or more terminals on a multi-hop relay path;
a total number of hops on a multi-hop relay path;
an associated number of hops of one or more terminals on a multi-hop relay path;
a service of an end terminal;
a service priority for an end terminal;
a service type for an end terminal;
Quality of Service (QoS) configuration for an end terminal; or
signal quality of one or more hops on a multi-hop relay path.

40. The method of any one of claims 37 to 39, further comprising:
receiving, by the first communication device, first reply information for the multi-hop relay service request.

41. The method of claim 40, wherein the first reply information is used for at least one of the following:
indicating successful authorization;
indicating transmission of multi-hop relay service;
indicating authorization failure;
indicating disconnection of multi-hop relay service connection; or
configuration information for multi-hop relay service transmission.

42. The method of claim 40 or 41, wherein the first reply message is carried by at least one of the following:
a second message in a random access procedure;
a response message for an RRC setup message;
a response message for an RRC resume message;
a response message for an RRC re-establishment message; or
an RRC reconfiguration message.

43. The method of any one of claims 40 to 42, further comprising:
accessing, by the first communication device, the second communication device or sending second reply information based on the first reply information.

44. The method of claim 43, wherein the second reply information is used for at least one of the following:
transmission of multi-hop relay service data;
disconnection of a multi-hop relay service connection;
establishment of a multi-hop relay service connection; or
configuration information for multi-hop relay service transmission.

45. The method of claim 43 or 44, wherein the second reply information is carried by at least one of the following: a discovery message, a PC5-RRC message, or a PC5 Signaling (PC5-S) message.

46. The method of claim 31, wherein the multi-hop relay related information comprises a multi-hop relay report.

47. The method of claim 46, wherein the multi-hop relay report is carried by at least one of the following:
an RRC message, or a measurement report message.

48. The method of claim 47, wherein the multi-hop relay report carries at least one of the following:
Layer 2 identification of one or more relays on a multi-hop relay path;
QoS configuration for an end terminal;
split-QoS configuration of a current hop; or
signal quality of one or more hops on a multi-hop relay path.

49. A method for relay communication, comprising:
receiving, by a second communication device, multi-hop relay related information, the multi-hop relay related information being used to request the second communication device to perform a multi-hop relay related operation.

50. The method of claim 49, wherein the multi-hop relay related information comprises registration request information, the method further comprising:
performing, by the second communication device, multi-hop relay authentication of a first communication device based on the registration request information.

51. The method of claim 50, wherein the registration request information comprises a to-be-authenticated relay role and/or relay capability of the first communication device.

52. The method of claim 51, wherein the to-be-authenticated relay role and/or relay capability of the first communication device comprises at least one of the following:
the first communication device, as an end terminal, supporting multi-hop U2U relay;
the first communication device, as an end terminal, supporting multi-hop U2N relay;
the first communication device, as a relay terminal, supporting multi-hop U2U relay;
the first communication device, as a relay terminal, supporting multi-hop U2N relay;
a maximum number of hops for multi-hop U2U relay supported by the first communication device; or
a maximum number of hops for multi-hop U2N relay supported by the first communication device.

53. The method of any one of claims 50 to 52, wherein information used for performing the multi-hop relay authentication comprises subscription information, the subscription information comprising a subscribed relay role and/or relay capability for the first communication device.

54. The method of claim 53, wherein the subscribed relay role and/or relay capability for the first communication device comprises at least one of the following:
the first communication device being subscribed as an end terminal in multi-hop U2U relay;
the first communication device being subscribed as an end terminal in multi-hop U2N relay;
the first communication device being subscribed as a relay terminal in multi-hop U2U relay;
the first communication device being subscribed as a relay terminal in multi-hop U2N relay;
a maximum number of hops for multi-hop U2U relay subscribed by the first communication device; or
a maximum number of hops for multi-hop U2N relay subscribed by the first communication device.

55. The method of any one of claims 50 to 54, further comprising:
in a case of successful authentication, sending, by the second communication device, authentication result information to a third communication device.

56. The method of claim 55, wherein the authentication result information comprises at least one of the following:
whether the first communication device supports multi-hop U2U/U2N relay as a remote terminal;
a maximum number of hops/supportable number of hops for multi-hop U2U/U2N relay supported by the first communication device as an end terminal;
whether the first communication device supports multi-hop U2U/U2N relay as a relay terminal; or
a maximum number of hops/supportable number of hops for multi-hop U2U/U2N relay supported by the first communication device as a relay terminal.

57. The method of claim 55 or 56, wherein in a case of handover, the authentication result information is carried in an Xn message from a source network device to a target network device.

58. The method of claim 57, wherein the Xn message further comprises a hop number and/or a split-Quality of Service (QoS) configuration of the first communication device with respect to the source network device.

59. The method of claim 49, wherein the multi-hop relay related information comprises a multi-hop relay service request, the method further comprising:
performing, by the second communication device, a multi-hop relay service based on the multi-hop relay service request.

60. The method of claim 59, wherein the multi-hop relay service request is carried by at least one of the following:
a first message in a random access procedure;
an RRC setup message;
an RRC resume message;
an RRC re-establishment message;
sidelink terminal information;
terminal assistance information; or
a measurement report message.

61. The method of claim 59 or 60, wherein the multi-hop relay service request comprises at least one of the following:
a cause value for connection setup, for indicating that connection is set up for performing multi-hop relay service;
a multi-hop relay request indication;
Layer 2 identification of one or more terminals on a multi-hop relay path;
a total number of hops on the multi-hop relay path;
an associated number of hops of one or more terminals on the multi-hop relay path;
a service of an end terminal;
a service priority for an end terminal;
a service type for an end terminal;
a QoS configuration for an end terminal; or
signal quality of one or more hops on the multi-hop relay path.

62. The method of any one of claims 59 to 61, wherein performing, by the second communication device, the multi-hop relay service based on the multi-hop relay service request comprises:
sending, by the second communication device, first reply information for the multi-hop relay service request.

63. The method of claim 62, wherein the first reply information is used for at least one of the following:
indicating successful authorization;
indicating transmission of multi-hop relay service;
indicating authorization failure;
indicating disconnection of a multi-hop relay service connection; or
configuration information for multi-hop relay service transmission.

64. The method of claim 62 or 63, wherein the first reply message is carried by at least one of the following:
a second message in a random access procedure;
a response message for an RRC setup message;
a response message for an RRC resume message;
a response message for an RRC re-establishment message; or
an RRC reconfiguration message.

65. The method of any one of claims 62 to 64, further comprising:
receiving, by the second communication device, an access request that is initiated by the first communication device based on the first reply information.

66. The method of any one of claims 62 to 65, wherein sending, by the second communication device, the first reply information for the multi-hop relay service request comprises:
performing, by the second communication device, at least one of the following for a terminal in a first state:
in a first case, indicating successful authorization and/or transmission of multi-hop relay service to one or more terminals in the first state on a multi-hop relay link; or
in a second case, indicating authorization failure and/or disconnection of multi-hop relay service connection to one or more terminals in the first state on a multi-hop relay link;
wherein the terminal in the first state comprises at least one of the following: a terminal that has established a PC5 unicast connection, a terminal that has completed a discovery procedure, or a terminal that has completed a PC5-Signaling (PC5-S) procedure;
the first case comprises at least one of the following: network authorization, a network providing multi-hop configuration, or a network accepting the multi-hop relay service request; and
the second case comprises at least one of the following: no network authorization, a network not providing multi-hop configuration, or a network not accepting the multi-hop relay service request.

67. The method of any one of claims 62 to 66, wherein sending, by the second communication device, the first reply information for the multi-hop relay service request comprises:
performing, by the second communication device, at least one of the following for a terminal in a second state:
in a first case, sending to one or more terminals in the second state on a multi-hop relay link a reply message that includes at least one of a discovery response, a Direct Communication Accept (DCA), or a report prior to Direct Communication Request (DCR) transmission; or
in a second case, not sending a reply message;
wherein the terminal in the second state comprises at least one of the following: a terminal that has not established a PC5 unicast connection, a terminal that has not completed a discovery procedure, or a terminal that has not completed a PC5-S procedure;
the first case comprises at least one of the following: network authorization, a network providing multi-hop configuration, or the network accepting the multi-hop relay service request; and
the second case comprises at least one of the following: no network authorization, a network not providing multi-hop configuration, or the network not accepting the multi-hop relay service request.

68. The method of claim 49, wherein the multi-hop relay related information comprises a multi-hop relay report.

69. The method of claim 68, wherein the multi-hop relay report is carried by at least one of the following:
an RRC message, or a measurement report message.

70. The method of claim 69, wherein the multi-hop relay report carries at least one of the following:
Layer 2 identification of one or more relays on a multi-hop relay path;
QoS configuration for an end terminal;
split-QoS configuration of a current hop; or
signal quality of one or more hops on the multi-hop relay path.

71. A first communication device, comprising:
a receiving unit, configured to receive first indication information, the first indication information being used to indicate multi-hop relay capability information of a second communication device.

72. A second communication device, comprising:
a sending unit, configured to send first indication information, the first indication information being used to indicate multi-hop relay capability information of the second communication device.

73. A first communication device, comprising:
a sending unit, configured to send multi-hop relay related information, the multi-hop relay related information being used to request a second communication device to perform a multi-hop relay related operation.

74. A second communication device, comprising:
a receiving unit, configured to receive multi-hop relay related information, the multi-hop relay related information being used to request the second communication device to perform a multi-hop relay related operation.

75. A communication device, comprising: a transceiver, a processor, and a memory, wherein the memory is configured to store a computer program, the transceiver is configured to communicate with other devices, and the processor is configured to invoke and execute the computer program stored in the memory, to cause the communication device to perform the method of any one of claims 1 to 22, 23 to 30, 31 to 48, or 49 to 70.

76. A chip, comprising a processor, configured to invoke and execute a computer program from a memory, to cause a device installed with the chip to perform the method of any one of claims 1 to 22, 23 to 30, 31 to 48, or 49 to 70.

77. A computer-readable storage medium, for storing a computer program that, when executed by a device, causes the device to perform the method of any one of claims 1 to 22, 23 to 30, 31 to 48, or 49 to 70.

78. A computer program product, comprising computer program instructions, which cause a computer to perform the method of any one of claims 1 to 22, 23 to 30, 31 to 48, or 49 to 70.

79. A computer program, which causes a computer to perform the method of any one of claims 1 to 22, 23 to 30, 31 to 48, or 49 to 70.
